# EUROPÄISCHE PATENTSCHRIFT

(11) **EP 3 107 219 B1**
(45) Veröffentlichungstag und Bekanntmachung des Hinweises auf die Patenterteilung: **12.12.2018**
(21) Anmeldenummer: 16172318.4
(22) Anmeldetag: 31.05.2016
(51) Int. Cl.: H04B 3/54, H04B 3/58

(54) **SYSTEM UND VERFAHREN ZUR REDUNDANTEN ANBINDUNG AN EIN BACKBONE-NETZWERK SOWIE EIN IN DIESEM SYSTEM EINSETZBARER UPLINK-KNOTEN**
SYSTEM AND METHOD FOR REDUNDANT CONNECTION TO A BACKBONE NETWORK AND UPLINK NODES WHICH CAN BE USED IN THIS SYSTEM
SYSTÈME ET PROCÉDÉ POUR LA LIAISON REDONDANTE À UN RÉSEAU D'OSSATURE AINSI QU'UN NOEUD DE LIAISON MONTANTE POUVANT ËTRE INSÉRÉ DANS CE SYSTÈME

(30) Priorität: 18.06.2015 DE 102015211291; 20.10.2015 DE 102015220422
(43) Veröffentlichungstag der Anmeldung: 21.12.2016
(73) Patentinhaber: Power Plus Communications AG, 68167 Mannheim (DE)
(72) Erfinder: RINDCHEN, Markus, 67574 Osthofen (DE)
(74) Vertreter: Patent- und Rechtsanwälte Ullrich & Naumann

(56) Entgegenhaltungen:
- EP-A1- 2 456 084
- EP-A1- 2 938 004
- WO-A2-01/63788
- US-A1- 2004 004 538

## Beschreibung

Die Erfindung betrifft ein System und ein Verfahren zur redundanten Anbindung eines Daten erzeugenden Geräts an ein Backbone-Netzwerk. Die Erfindung betrifft ferner einen Uplink-Knoten zum Ermöglichen einer redundanten Anbindung eines Daten erzeugenden Geräts an ein Backbone-Netzwerk sowie ein Verfahren zum Aushandeln eines Betriebsmodus eines Uplink-Knotens.

In der Praxis ist es immer wieder notwendig, verschiedenste Geräte über ein Weitbereichsnetzwerk an ein Backbone-Netzwerk anzubinden. Ein Anwendungsfall, der in den vergangenen Jahren an Bedeutung gewonnen hat und weiter gewinnen wird, ist das Anbinden von SmartMetern. Ein SmartMeter ist ein elektronischer Zähler, der zum Messen von transportierter elektrischer Energie, Gas, Wasser, Wärme oder dergleichen eingesetzt wird. Dabei kann sowohl der Verbrauch als auch die Erzeugung gemessen werden. SmartMeter können über das Weitbereichsnetzwerk Messwerte beispielsweise an ein Versorgungsunternehmen übertragen, wo die Messwerte für Abrechnungszwecke oder zum Erzeugen von Verbrauchsverläufen genutzt werden. Gleichzeitig kann ermöglicht das Weitbereichsnetzwerk einen Zugriff auf die SmartMeter zur Administration. Zunehmend werden auch SmartMeter-Gateways eingesetzt, die einen kontrollierten und verschlüsselten Zugriff auf einen SmartMeter und dessen Messwerte ermöglichen. Beim Einsatz eines SmartMeter-Gateways wird dieser mit dem Weitbereichsnetzwerk verbunden.

Vielfach wird zur Anbindung dieser Geräte PLC (Powerline Communication) oder die Breitband-Variante BPL (Breitband Power-Line) eingesetzt, da hier keine dedizierten Leitungen zur Kommunikation installiert werden müssen, sondern die Energieversorgungsleitungen verwendet werden können. Herkömmliche (Schmalband-) PLC-Systeme nutzen üblicherweise ein Frequenzband zwischen 3 bis 95 kHz und werden insbesondere für Rundsteueraufgaben innerhalb von Energieversorgungsnetzwerken weiterhin intensiv genutzt. BPL nutzt üblicherweise einen Frequenzbereich zwischen etwa einem und 30 MHz. Die Daten werden auf eine Vielzahl von Subträgern moduliert und über die Energieversorgungsleitungen übertragen. Mit den derzeit bekannten Techniken lassen sich - bei idealen Bedingungen - Übertragungsraten bis in den dreistelligen Mbit/sec-Bereich realisieren. BPL eignet sich nicht nur für die Übertragung von Daten innerhalb von Gebäuden sondern auch zum Austausch von Daten zwischen einem Endgerät innerhalb eines Gebäudes und einem Punkt außerhalb des Gebäudes, beispielsweise einer Trafostation.

BPL-Netze sind in Form von Zellen organisiert. Zentrale Einheit einer Zelle ist ein Headend. Dort laufen alle Daten aus der Zelle zusammen. Ein BPL-Endgerät, das Daten über das BPL-Netzwerk übertragen möchte, meldet sich bei einem erreichbaren Headend an. Zu diesem Zweck hat das Headend eine BPL-Schnittstelle, mit der ein Datenaustausch über das BPL-Netzwerk ermöglicht wird. Gleichzeitig hat das Headend eine Uplink-Schnittstelle, über die Datenpakete mit einem Backbone-Netzwerk ausgetauscht werden können. Jedes Headend verwaltet die verbundenen Endgeräte und bildet ein Gateway zwischen dem BPL-Netzwerk und dem Backbone-Netzwerk. Das Headend leitet Datenpakete von den verbundenen BPL-Endgeräten an das Backbone-Netzwerk weiter und umgekehrt. Nachteilig an diesen Systemen ist, dass der Installationsaufwand relativ hoch ist. Neben der Installation von Headends muss zu dem Headend eine Datenanbindung mit ausreichender Bandbreite vorliegen, damit ein Datenaustausch zwischen dem Backbone-Netzwerk und allen durch das Headend verwalteten Endgeräten mit ausreichender Qualität möglich ist. Vielfach lohnt dieser Aufwand lediglich in dichter besiedelten Gebieten.

Zur Vermeidung einer redundanten Anbindung der Headends zu dem Backbone-Netzwerk offenbart die EP 2 938 004 A1 ein Verfahren, mit dem auf eine ausgefallene Verbindung zwischen Headend und Backbone-Netzwerk reagiert werden kann und eine Blockade der durch das Headend verwalteten Endgeräte verhindert wird. Bei Detektion einer ausgefallenen Verbindung zu dem Backbone-Netzwerk schaltet das Headend seine Verwaltungsfunktion ab und wechselt in einem Repeater-Modus. Auf diese Weise können Datenpakete zu einem weiteren Headend weitergeleitet werden und gelangen über das weitere Headend in das Backbone-Netzwerk.

Andere Powerline-Communication-basierte Systeme sind in der WO 01/63788 A2, der US 2004/0004538 A1 und der EP 2 456 084 A1 offenbart.

Neben PLC bzw. BPL kommen häufig auch Funkanbindungen zum Einsatz, wobei hier meist ein Mobilfunknetz genutzt wird. Das Funknetz dient dann als Zugangsnetz für das Backbone-Netzwerk. Dieser Ansatz bietet den erheblichen Vorteil, dass der infrastrukturelle Mehraufwand relativ gering ist. Es müssen lediglich in den anzubindenden Endgeräten geeignete Funkempfänger vorgesehen sein, die jedoch vergleichsweise kostengünstig sind. Dadurch lassen sich Anbindungen auch in dünner besiedelten Gebieten kostengünstig realisieren. Nachteilig bei der Verwendung von Funknetzen ist jedoch, dass eine ausreichend gute Funkverbindung nicht immer gewährleistet ist. Insbesondere bei der Anbindung von SmartMetern bzw. SmartMeter-Gateways zeigt die Erfahrung, dass bei lediglich 60 % der Installationsorte ausreichende Feldstärken für eine funkbasierte Kommunikationsverbindung vorhanden sind. Dies liegt daran, dass SmartMeter bzw. SmartMeter-Gateways vielfach in Kellerräumen installiert werden, die keinen oder nur sehr eingeschränkten Funkempfang bieten. Daher ist auch dieser Ansatz problematisch und nicht in allen Fällen geeignet.

Gelegentlich sind auch kabelgebundene Zugangssysteme, wie DSL (Digital Subscriber Line)-Varianten, im Einsatz. Nachteilig hieran ist, dass Kommunikationsleitungen zu dem kabelgebundenen Zugangssystem häufig nicht in dem gleichen Raum liegen wie das anzubindende Endgerät. Dadurch müssen zusätzliche Kabel installiert werden. Alternativ können DLAN (Direct Local Area Network)-Strecken aufgebaut werden, die eine Verbindung zwischen dem Installationsort des anzubindenden Endgeräts und dem DSL-Modem über die hausinternen Energieversorgungsleitungen herstellen. In beiden Fällen ergeben sich relativ hohe Installationskosten. Ferner ist die Erreichbarkeit des angebundenen Endgeräts von Faktoren abhängig, auf die das Versorgungsunternehmen keinen Einfluss hat, beispielsweise die Betriebsfähigkeit des DSL-Modems.

Der vorliegenden Erfindung liegt daher die Aufgabe zugrunde, ein System und ein Verfahren der eingangs genannten Art derart auszugestalten und weiterzubilden, dass eine flexible Anbindung von Daten erzeugenden Geräten an ein Backbone-Netzwerk bei gleichzeitig möglichst geringem administrativem Aufwand möglich ist. Ferner sollen die hierfür notwendigen Komponenten und Verfahren angegeben werden.

Erfindungsgemäß wird die voranstehende Aufgabe durch die Merkmale des Anspruchs 1 gelöst. Danach umfasst das in Rede stehende System:
ein Primär-Netzwerk, das einen Austausch von Datenpaketen mit dem Backbone-Netzwerk ermöglicht,
ein Sekundär-Netzwerk, das mittels PLC - Power-Line Communication - oder mittels BPL - Breitband Power-Line - auf einem Energieversorgungsnetzwerk ausgebildet ist,
mindestens ein Daten erzeugendes Gerät, das zum Erzeugen von zu versendenden Datenpaketen zur Übertragung an das Backbone-Netzwerk ausgebildet ist,
mehrere Uplink-Knoten, die jeweils eine erste Schnittstelle zur Kommunikation mit dem Primär-Netzwerk und eine zweite Schnittstelle zur Kommunikation mit dem Sekundär-Netzwerk aufweisen, wobei die Uplink-Knoten dazu ausgebildet sind, für das Sekundär-Netzwerk in einen Repeater-Modus oder in einen Headend-Modus zu schalten, wobei ein Schalten in den Repeater-Modus oder in den Headend-Modus zwischen den Uplink-Knoten ausgehandelt wird und wobei mindestens einer der Uplink-Knoten im Headend-Modus betrieben ist,
wobei jeder Uplink-Knoten zudem dazu ausgebildet ist, ein zu versendendes Datenpaket über die erste Schnittstelle an das Primär-Netzwerk oder - bei Unterschreiten eines Grenzwerts durch die Qualität der Verbindung zu dem Primär-Netzwerk - über die zweite Schnittstelle an das Sekundär-Netzwerk zu versenden, und
wobei ein Uplink-Knoten im Headend-Modus ein über dessen zweite Schnittstelle von einem anderen Uplink-Knoten empfangenes Datenpaket über die erste Schnittstelle an das Primär-Netzwerk weiterleitet.
Hinsichtlich eines Uplink-Knotens ist die voranstehende Aufgabe durch die Merkmale des Anspruchs 5 gelöst. Danach weist der Uplink-Knoten auf:
eine erste Schnittstelle, die zur Kommunikation mit einem Primär-Netzwerk ausgebildet ist, wobei über die erste Schnittstelle und das Primär-Netzwerk ein Austausch von Datenpaketen mit dem Backbone-Netzwerk ermöglicht ist,
eine zweite Schnittstelle, die zur Kommunikation mit einem Sekundär-Netzwerk ausgebildet ist, wobei das Sekundär-Netzwerk mittels PLC - Power-Line Communication - oder mittels BPL - Breitband Power-Line - auf einem Energieversorgungsnetzwerk ausgebildet ist,
eine Routingeinheit, die dazu ausgebildet ist, ein zu versendendes Datenpaket eines Daten erzeugenden Geräts bei Überschreiten eines ersten Grenzwertes durch die Qualität der Verbindung zu dem Primär-Netzwerk an die erste Schnittstelle zu leiten und bei Unterschreiten eines zweiten Grenzwertes durch die Qualität der Verbindung zu dem Primär-Netzwerk an die zweite Schnittstelle zu leiten,
eine Weiterleitungseinheit, die in einen Repeater-Modus oder einen Headend-Modus versetzbar ist und die kommunizierend mit der ersten und der zweiten Schnittstelle verbunden und dazu ausgebildet ist, in dem Repeater-Modus ein über die zweite Schnittstelle empfangenes Datenpaket wieder über die zweite Schnittstelle an das Sekundär-Netzwerk weiterzuleiten und in dem Headend-Modus ein über die zweite Schnittstelle empfangenes Datenpaket über die erste Schnittstelle an das Primär-Netzwerk weiterzuleiten, und
eine Konfigurationseinheit, die zum Aushandeln eines Betriebsmodus der Weiterleitungseinheit mit anderen Uplink-Knoten ausgebildet ist und die abhängig von einem Ergebnis des Aushandelns die Weiterleitungseinheit zum Aktivieren des Repeater-Modus oder zum Aktivieren des Headend-Modus veranlasst.
In verfahrensmäßiger Hinsicht ist die voranstehende Aufgabe durch die Merkmale des Anspruchs 16 gelöst. Danach umfasst das Verfahren die Schritte:
Empfangen oder Erzeugen eines zu versendenden Datenpakets durch einen ersten Uplink-Knoten und
Versenden des zu versendenden Datenpakets über eine erste Schnittstelle des ersten Uplink-Knotens an das Primär-Netzwerk, wenn ein erster Grenzwert durch die Qualität der Verbindung zu dem Primär-Netzwerk überschritten wird, oder über eine zweite Schnittstelle des ersten Uplink-Knotens an ein Sekundär-Netzwerk, wenn ein zweiter Grenzwert durch die Qualität der Verbindung zu dem Primär-Netzwerk unterschritten wird, wobei das Sekundär-Netzwerk mittels PLC - Power-Line Communication - oder mittels BPL - Breitband Power-Line - auf einem Energieversorgungsnetzwerk ausgebildet ist,
wobei bei Versenden des zu versendenden Datenpakets über die zweite Schnittstelle zusätzlich die Schritte ausgeführt werden:
   Übertragen des zu versendenden Datenpakets über das Sekundär-Netzwerk an einen zweiten Uplink-Knoten, der in einem Headend-Modus betrieben wird und mit dem Sekundär-Netzwerk verbunden ist, wobei das zu versendende Datenpaket während des Übertragens durch einen oder mehre Uplink-Knoten in einem Repeater-Modus weitergeleitet werden kann, wobei ein Schalten in den Repeater-Modus oder in den Headend-Modus zwischen den Uplink-Knoten ausgehandelt wird und wobei mindestens einer der Uplink-Knoten im Headend-Modus betrieben wird,
   Empfangen des zu versendenden Datenpakets durch den zweiten Uplink-Knoten,
   Weiterleiten des zu versendenden Datenpakets durch den zweiten Uplink-Knoten an dessen erste Schnittstelle und
   Versenden des zu versendenden Datenpakets an das Primär-Netzwerk.

In erfindungsgemäßer Weise ist zunächst erkannt worden, dass durch Kombination eines Primär-Netzwerks mit einem Sekundär-Netzwerk, das mittels PLC (Power Line Communication) oder BPL (Breitband-Power Line) auf einem Energieversorgungsnetzwerk gebildet ist, eine zuverlässige und dennoch kostengünstige redundante Anbindung eines Daten erzeugenden Geräts an ein Backbone-Netzwerk ermöglicht wird. Zum Austausch von Datenpaketen zwischen einem Uplink-Knoten und dem Backbone-Netzwerk wird das Primär-Netzwerk genutzt. Sofern einem Uplink-Knoten keine ausreichend gute Qualität einer Verbindung zum Primär-Netzwerk zur Verfügung steht, wird ein Datenpaket erfindungsgemäß über das Sekundär-Netzwerk zu einem weiteren Uplink-Knoten geleitet, der eine ausreichend gute Verbindung zum Primär-Netzwerk hat. Dabei sind die einzelnen Uplink-Knoten derart ausgestaltet, dass für den Betrieb des Sekundär-Netzwerks kein dedizierter Infrastrukturknoten notwendig sind. Vielmehr können die infrastrukturellen Aufgaben im Sekundär-Netzwerk von "gewöhnlichen" Systemknoten übernommen werden, die ihre Funktion untereinander aushandeln. Diese erfindungsgemäße Grundidee wird in einem erfindungsgemäßen System und einem hierfür verwendeten erfindungsgemäßen Uplink-Knoten umgesetzt.
Für den Zugang zu dem Primär-Netzwerk und dem Sekundär-Netzwerk umfasst das erfindungsgemäße System mehrere Uplink-Knoten. Jeder der Uplink-Knoten weist eine erste Schnittstelle und eine zweite Schnittstelle auf. Die erste Schnittstelle ist zur Kommunikation mit dem Primär-Netzwerk ausgebildet. Die zweite Schnittstelle ist zur Kommunikation mit dem Sekundär-Netzwerk ausgebildet, d.h. die zweite Schnittstelle ist - vereinfacht gesprochen - durch ein PLC/BPL-Modem mit zugehörender Koppeleinrichtung zum Ein- und Auskoppeln von PLC/BPL-Signale auf die/von den Leitungen des Energieversorgungnetzwerk gebildet. Sofern das Primär-Netzwerk mit ausreichender Qualität verfügbar ist, nutzt ein Uplink-Knoten die erste Schnittstelle zum Versenden eines zu versendenden Datenpakets. Wenn die Qualität der Verbindung zu dem Primär-Netzwerk jedoch einen Grenzwert - nachfolgend auch als zweiter Grenzwert bezeichnet - unterschreitet, nutzt der Uplink-Knoten nicht die eigene erste Schnittstelle zum Versenden des Datenpakets, sondern die zweite Schnittstelle zum Übertragen des Datenpakets an das Sekundär-Netzwerk. Über das Sekundär-Netzwerk wird das Datenpaket dann an einen anderen Uplink-Knoten transportiert, der dann über seine Anbindung an das Primär-Netzwerk das Datenpaket an das Backbone-Netzwerk sendet.

Zur Vermeidung eines infrastrukturellen Mehraufwands und zusätzlicher Administrationskosten ist das Sekundär-Netzwerk erfindungsgemäß als selbstorganisierendes Netzwerk ausgebildet. Demnach muss das Sekundär-Netzwerk keine dedizierten Headends mit jeweils dediziertem Uplink aufweisen. Vielmehr sind die Uplink-Knoten dazu ausgebildet, für das Sekundär-Netzwerk in einem Repeater-Modus oder in einem Headend-Modus betrieben zu werden. Ob ein Uplink-Knoten den Repeater-Modus oder den Headend-Modus aktiviert, wird zwischen den Uplink-Knoten ausgehandelt. Auf diese Weise entsteht ein selbstorganisierendes Netzwerk, das keinen dedizierten Headend benötigt und nach einer Initialisierungsphase ein Redundanz-Netzwerk bilden kann. Dabei bietet es sich an, dass die Verbindungen im Sekundär-Netzwerk bereits bei erreichbarem Primär-Netzwerk aufgebaut werden, damit bei Ausfall der Verbindung zu dem Primär-Netzwerk möglichst zügig auf das Sekundär-Netzwerk gewechselt werden kann.

Wenn sich ein Uplink-Knoten im Repeater-Modus befindet, leitet der Uplink-Knoten ein über die zweite Schnittstelle empfangenes Datenpaket, das nicht für den Uplink-Knoten selbst bestimmt ist, wieder über die zweite Schnittstelle an das Sekundär-Netzwerk weiter. Hierbei wird das Datenpaket eventuell noch aufbereitet, d.h. es wird beispielsweise eine Verstärkung, Entzerrung, Fehlerkorrektur und/oder dergleichen vorgenommen. Sofern ein Uplink-Knoten sich im Headend-Modus befindet, leitet dieser Uplink-Knoten ein über die zweite Schnittstelle empfangenes Datenpaket, das nicht für den Uplink-Knoten selbst bestimmt ist, über eine erste Schnittstelle an das Primär-Netzwerk und damit an das Backbone-Netzwerk. Auf diese Weise wird einem Uplink-Knoten eine redundante Anbindung an das Backbone-Netzwerk zur Verfügung gestellt, nämlich zum einen direkt über seine erste Schnittstelle und das Primär-Netzwerk oder über seine zweite Schnittstelle, das Sekundär-Netzwerk und einen weiteren, innerhalb des Systems eingebundenen Uplink-Knoten, der sich in einem Headend-Modus befindet. Dadurch hat das erfindungsgemäße System den erheblichen Vorteil, dass keine infrastrukturellen Maßnahmen ergriffen werden müssen, insbesondere keine dedizierte Hardware zum Betrieb des Netzwerks bereitgestellt werden muss. Vielmehr müssen lediglich ausreichend erfindungsgemäße Uplink-Knoten bereitgestellt sein, die jeweils mindestens einen benachbarten Knoten innerhalb des PLC-/BPL-Netzwerks erreichen können. Mindestens einer der Uplink-Knoten muss eine Verbindung in das Primär-Netzwerk aufweisen. Wie bereits angesprochen, ist beispielsweise bei der Anbindung von SmartMetern oder SmartMeter-Gateways bei 60% der installierten Einheiten eine ausreichende Qualität zur Verbindung in das Primärnetzwerk vorhanden. Dadurch sind ausreichend Uplink-Knoten zu erwarten, die eine ausreichende Qualität der Verbindung in das Primär-Netzwerk aufweisen, um in einen Headend-Modus versetzt zu werden. Auf diese Weise kann die Forderung nach mindestens einem Headend üblicherweise problemlos erfüllt werden. Ferner kann durch mehrere Uplink-Knoten im Headend-Modus erzielt werden, dass jede der ersten Schnittstellen eines Uplink-Knotens im Headend-Modus geringer belastet wird, als dies bei einem einzelnen Headend der Fall wäre.

"Ausreichende Qualität" einer Verbindung in das Primärnetzwerk bedeutet in diesem Zusammenhang, dass die Qualität der Verbindung einen ersten Grenzwert überschreitet. Dabei kann die Qualität durch verschiedenste Parameter definiert sein. Denkbar wäre beispielsweise die Feldstärke eines Funksignals, die durch eine Antenne des Uplink-Knotens empfangbar ist. Denkbar wäre auch eine erreichbare Übertragungsrate, Latenzzeiten für die Übertragung eines Signals, durchschnittliche Anzahl notwendiger Sendewiederholungen und/oder andere vergleichbare Kriterien, die einen Qualitätsmaßstab für eine Datenverbindung darstellen können. Es können auch verschiedene Kriterien miteinander kombiniert werden. Entsprechend dem gewählten Maßstab ist auch der erste Grenzwert unterschiedlich. Hier sind aus der Praxis entsprechende Bewertungsverfahren bekannt, wann eine Verbindungsqualität als ausreichend für eine Datenübertragung angesehen werden kann und wann nicht mehr.

Ein "Backbone-Netzwerk" bezeichnet in diesem Zusammenhang ein Netzwerk, das meist kabelgebunden aufgebaut ist und eine relativ hohe Datenrate aufweist. Dabei ist eine große Anzahl von Rechnern, Servern und anderen Netzwerk-Knoten durch das Backbone-Netzwerk untereinander verbunden. Das Backbone-Netzwerk erlaubt einen Datenaustausch zwischen den verbundenen Geräten, vorzugsweise über größere Entfernungen, beispielsweise über mehrere 10 Kilometer. Das Backbone-Netzwerk ist nicht auf eine bestimmte Technologie beschränkt, auch wenn vorzugsweise Ethernet mit einer Übertragungsrate von 1 Gbit/sec oder 10 Gbit/sec Verwendung finden. Für den Zugang zum Backbone-Netzwerk können weitere Netzwerke dienen, beispielsweise das Primär-Netzwerk.

In einer bevorzugten Ausgestaltung des Primär-Netzwerkes ist dieses durch eine Funktechnologie implementiert. Dafür können prinzipiell verschiedenste aus der Praxis bekannte Funktechnologien zum Einsatz kommen. Vorzugsweise wird jedoch ein Mobilfunknetz genutzt, beispielsweise LTE (Long Term Evolution), UMTS (Universal Mobile Telecommunications System), GSM (Global System for Mobile Communications) oder vergleichbare Mobilfunkstandards. Die Verwendung eines Mobilfunknetzes bietet insbesondere den Vorteil, dass keine eigenen Sendemasten aufgestellt werden müssen und dass geeignete Empfänger- und Sendemodule für die Uplink-Knoten vergleichsweise günstig verfügbar sind.

Prinzipiell gibt es verschiedene Möglichkeiten, wie ein Daten erzeugendes Gerät ausgebildet sein kann. In einer möglichen Ausgestaltung ist das Daten erzeugende Gerät durch einen der Uplink-Knoten selbst gebildet. Allgemein formuliert bedeutet dies, dass der Uplink-Knoten ein zu versendendes Datenpaket selbst erzeugt. Die Daten, die in dem zu versendenden Datenpaket enthalten sind, können von dem Uplink-Knoten bzw. einer in dem Uplink-Knoten enthaltenen Einheit oder von einer mit dem Uplink-Knoten verbundenen (externen) Einheit erzeugt werden. Ein Beispiel für selbst erzeugte Daten sind Statusinformationen, die von dem Uplink-Knoten erzeugt und an das Backbone-Netzwerk versendet wären. Bei einem anderen Beispiel weist der Uplink-Knoten beispielsweise einen Sensor auf, der eine Temperatur misst und den Messwert dem Uplink-Knoten als analoges oder digitales Signal zur Verfügung stellt. Der Uplink-Knoten würde den Messwert dann gegebenenfalls digitalisieren, paketieren und das dadurch erzeugte Datenpaket an das Backbone-Netzwerk versenden. Eine mit dem Uplink-Knoten verbundene (externe) Einheit ist eine nicht in dem Gehäuse des Uplink-Knotens angeordnete Einheit, die keine paketierten Daten ausgibt/ausgeben kann. Diese Einheit kann beispielsweise durch einen Sensor, einen Zähler oder dergleichen gebildet sein. Die Verbindung zwischen derartigen (externen) Einheiten und dem Uplink-Knoten kann durch analoge und/oder digitale Schnittstellen gebildet sein, beispielsweise RS232 oder RS485. Der Uplink-Knoten würde bei analogen Schnittstellen die empfangenen Signale digitalisieren. Danach würde der Uplink-Knoten die digitalisierten Daten oder die über die digitale Schnittstelle empfangenen digitalen Daten in ein oder mehrere Datenpakete paketieren und an das Backbone-Netzwerk versende.

In einer anderen bevorzugten Ausgestaltung ist das Daten erzeugende Gerät durch ein (separates, externes) Endgerät gebildet, das kommunizierend mit einem der Uplink-Knoten verbunden ist und Daten in Form von Datenpaketen an den verbundenen Uplink-Knoten übergibt. Ein derartiges Endgerät ist beispielsweise durch ein SmartMeter oder ein SmartMeter-Gateway gebildet. In dieser Ausgestaltung kann ein Uplink-Knoten beispielsweise von einem Mobilfunkanbieter vertrieben und von dem Versorgungsunternehmen in das System eingebunden werden. Der Uplink-Knoten würde in dieser Ausgestaltung die Funktion eines Gateways übernehmen, der empfangene Datenpakete - eventuell nach vorherigem Umpaketieren oder Kapseln in ein anderes Datenpaket - über seine erste oder seine zweite Schnittstelle an das Backbone-Netzwerk weiterleitet. Zur Verbindung eines derartigen Endgeräts kann der Uplink-Knoten eine dritte Schnittstelle aufweisen. Einige Beispiele für eine derartige dritte Schnittstelle sind Ethernet, CAN (Controller Area Network)-Bus oder W-LAN (Wireless Local Area Network).

Prinzipiell ist es auch möglich, die beiden zuvor genannten Ausgestaltungen zu kombinieren, d.h. dass einer oder mehrere der Uplink-Knoten selbst ein Daten erzeugendes Gerät darstellt und dass ein anderer Teil der Uplink-Knoten mit einem Daten erzeugenden Endgerät verbunden ist. Auf diese Weise kann ein universell einsetzbares System geschaffen werden. Prinzipiell kann ein Uplink-Knoten auch beide Ausgestaltungen vereinen, d.h. er ist Daten erzeugendes Gerät im Sinne der vorliegenden Erfindung und kann zusätzlich mit einem anderen Daten erzeugenden Gerät verbunden werden.

Ein erfindungsgemäßer Uplink-Knoten, der in einem erfindungsgemäßen System einsetzbar ist, weist eine erste Schnittstelle, eine zweite Schnittstelle, eine Routingeinheit, eine Weiterleitungseinheit und eine Konfigurationseinheit auf. Die erste Schnittstelle stellt eine Verbindung zu dem Primär-Netzwerk her und ist - je nach Ausgestaltung des Primär-Netzwerks - auf dieses angepasst. Die erste Schnittstelle erlaubt einen Datenaustausch über das Primär-Netzwerk mit dem Backbone-Netzwerk. Die zweite Schnittstelle stellt eine Verbindung zu dem Sekundär-Netzwerk her. Da das Sekundär-Netzwerk durch PLC oder BPL auf einem Energieversorgungsnetzwerk gebildet ist, ist die zweite Schnittstelle (und gegebenenfalls dazugehörende Elemente) durch ein PLC- oder BPL-Modem mit zugehörender Koppeleinrichtung gebildet.

Die Routingeinheit übernimmt die Aufgabe, zu versendende Datenpakete über die erste oder die zweite Schnittstelle zu versenden. Hierzu werden der Routingeinheit Informationen über die Qualität der Verbindung zu dem Primär-Netzwerk zur Verfügung gestellt. Ferner hat die Routingeinheit Zugriff auf einen ersten und einen zweiten Grenzwert, wobei die Grenzwerte beispielsweise in einem Speicher der Routingeinheit abgelegt sein können oder in einem Konfigurationsspeicher des Uplink-Knotens. Wenn die Qualität der Verbindung zu dem Primär-Netzwerk den ersten Grenzwert überschreitet, wird ein zu versendendes Datenpaket über die erste Schnittstelle an das Primär-Netzwerk versendet. Wenn die Qualität der Verbindung zu dem Primär-Netzwerk den zweiten Grenzwert unterscheitet, wird ein zu versendendes Datenpakte über die zweite Schnittstelle an das Sekundär-Netzwerk versendet.

Prinzipiell ist es möglich den ersten Grenzwert gleich dem zweiten Grenzwert zu wählen. Auf diese Weise wird bei Überschreiten des Grenzwertes die erste Schnittstelle, bei Unterschreiten des Grenzwerts die zweite Schnittstelle genutzt. Die kann jedoch bei einer schwankenden Qualität dazu führen, dass wiederholt zwischen erster und zweiter Schnittstelle gewechselt wird, ohne dass dies zwingend notwendig wäre. Insofern kann der erste Grenzwert höher gewählt werden als der zweite Grenzwert. Dadurch wird eine Art Hysterese realisiert, wodurch ein definierteres Verhalten entsteht. Entsprechendes gilt besonders, wenn der erste und der zweite Grenzwert für den Wechsel zwischen Headend-Modus und Repeater-Modus verwendet werden. Es wäre aber auch denkbar, unterschiedliche Grenzwerte für das Entscheiden der Nutzung der ersten oder zweiten Schnittstelle und für den Betriebsmodus des Uplink-Knotens zu definieren.

Die Wahl der ersten und/oder des zweiten Grenzwerts kann dabei an die Anforderungen an den Uplink-Knoten angepasst sein. Wenn beispielsweise durch ein Daten erzeugendes Gerät Daten lediglich mit sehr geringen Datenraten erzeugt werden, so könnte der erste Grenzwert deutlich unterhalb des ersten Grenzwertes für einen Uplink-Knoten liegen, bei dem ein Daten erzeugendes Gerät Daten mit wesentlich höherer Datenrate erzeugt.

Die Weiterleitungseinheit ist dafür verantwortlich, einen Repeater-Modus oder einen Headend-Modus des Uplink-Knotens zu realisieren. Entsprechend ist die Weiterleitungseinheit kommunizierend mit der ersten Schnittstelle und der zweiten Schnittstelle verbunden. Wenn sich die Weiterleitungseinheit in dem Repeater-Modus befindet, leitet die Weiterleitungseinheit ein über die zweite Schnittstelle empfangenes Datenpaket, das nicht für den Uplink-Knoten der Weiterleitungseinheit bestimmt ist, wieder an die zweite Schnittstelle weiter. Dabei kann zuvor eine Aufbereitung des empfangenen Datenpakets erfolgen. Wenn sich die Weiterleitungseinheit in dem Headend-Modus befindet, leitet die Weiterleitungseinheit ein über die zweite Schnittstelle empfangenes Datenpaket, das nicht für den Uplink-Knoten der Weiterleitungseinheit bestimmt ist, an die erste Schnittstelle weiter. Entsprechendes gilt auch in umgekehrter Richtung, d.h. wenn ein Datenpaket über die erste Schnittstelle für ein Gerät im Sekundär-Netzwerk empfangen wird.

Die Konfigurationseinheit ist dafür verantwortlich, einen geeigneten Betriebsmodus des Uplink-Knotens mit anderen Uplink-Knoten auszuhandeln. Hierbei finden die Uplink-Knoten des Systems heraus, welcher Uplink-Knoten am ehesten als Headend für das Sekundär-Netzwerk innerhalb des Systems geeignet wäre. Entsprechend dem Ergebnis dieses Aushandelns veranlasst die Konfigurationseinheit die Weiterleitungseinheit dazu, den Repeater-Modus oder den Headend-Modus zu aktivieren.

Für den Fall, dass ein Uplink-Knoten selbst ein Daten erzeugendes Gerät ist, kann der Uplink-Knoten eine Datenerzeugungseinheit umfassen. Die Datenerzeugungseinheit wäre zum Erzeugen von Daten und zum Paketieren der Daten in zu versendende Datenpakete ausgebildet. Die Datenerzeugungseinheit ist dann mit der Routingeinheit des Uplink-Knotens verbunden, die ein zu versendendes Datenpaket entweder über die erste Schnittstelle oder die zweite Schnittstelle versendet. Wenn der Uplink-Knoten nicht-paketierte Daten von einer (externen) Einheit empfängt, kann die Datenerzeugungseinheit auch zum Paketieren dieser Daten ausgestaltet sein.

Für die Verbindung des Uplink-Knotens mit einem Endgerät, das zu versendende Datenpakete an den Uplink-Knoten sendet, kann der Uplink-Knoten eine dritte Schnittstelle aufweisen. Die dritte Schnittstelle wäre ebenso kommunizierend mit der Routing-Einheit verbunden. Eine bevorzugte Implementierung der dritten Schnittstelle kann beispielsweise durch Ethernet gebildet sein. Denkbar wäre jedoch auch die Verwendung anderer paketorientierter Schnittstellen, wie beispielsweise ein CAN (Control Area Network)-Bus.

Ein Uplink-Knoten kann prinzipiell auch eine Datenerzeugungseinheit und eine dritte Schnittstelle aufweisen. Über die dritte Schnittstelle wäre der Uplink-Knoten mit einem Endgerät verbunden und wäre in der Lage, zu versendende Datenpakete von dem Endgerät zu empfangen und über seine erste oder zweite Schnittstelle an das Backbone-Netzwerk weiterzuleiten. Gleichzeitig können intern entstehende Datenpakete, beispielsweise Statusmeldungen erzeugt, paketiert und an das Backbone-Netzwerk gesendet werden. Ein Fachmann wird erkennen, dass beide Funktionalitäten gleichzeitig bereitgestellt werden können.

In einer bevorzugten Weiterbildung des Uplink-Knotens ist ein Grundzustand des Uplink-Knotens der Betrieb im Headend-Modus. Da die Grundfunktion des Repeater-Modus bzw. des Headend-Modus in der Weiterleitungseinheit des Uplink-Knotens implementiert ist, wäre damit die Weiterleitungseinheit dazu ausgebildet, als Grundzustand den Headend-Modus anzunehmen. Der Grundzustand wird dabei vorzugsweise nach Einschalten des Uplink-Knotens und nach Zurücksetzen des Uplink-Knotens angenommen. In dieser Ausgestaltung befindet sich damit jeder neu dem System hinzugefügte Uplink-Knoten in dem Headend-Modus und würde bei nicht ausreichender Qualität der Verbindung in das Primär-Netzwerk den Headend-Modus wieder verlassen. Auf diese Weise ist es möglich, dass auch bei ausgehandeltem Headend in dem Sekundär-Netzwerk ein neuer Uplink-Knoten die Funktion des Headends annehmen kann, wenn dieser besser als Headend geeignet ist als der ausgehandelte Headend.

Vorzugsweise ist der Uplink-Knoten dazu ausgebildet, über seine zweite Schnittstelle eine Broadcast-Nachricht an das Sekundär-Netzwerk zu senden, wenn die Qualität der Verbindung zu dem Primär-Netzwerk den ersten Grenzwert überschreitet. Mittels der Broadcast-Nachricht würde der Uplink-Knoten allen innerhalb des Sekundär-Netzwerks "sichtbaren" weiteren Uplink-Knoten die Bereitschaft zur Funktion als Headend signalisieren. Dabei enthält die Broadcast-Nachricht vorzugsweise einen Qualitätskennwert, der repräsentativ für die Qualität der Verbindung zum Primär-Netzwerk ist. Dabei gibt es verschiedene Möglichkeiten, wie der Qualitätskennwert realisiert werden kann. So wäre ein diskreter Qualitätskennwert denkbar, der beispielsweise fünf diskrete Werte annehmen kann, wobei der Wert 5 eine sehr gute Verbindungsqualität in das Primär-Netzwerk signalisieren würde, ein Wert von 1 eine eher mäßige Qualität zum Primär-Netzwerk repräsentiert. Der Qualitätskennwert kann auch detaillierte Informationen aufweisen und kann verschiedene Faktoren enthalten, wie beispielsweise empfangbare Feldstärke, Verzerrung eines Funksignals und durchschnittlich notwendige Fehlerkorrekturen bei empfangenen Datenpaketen. Auf diese Weise erhalten benachbarte Uplink-Knoten Informationen darüber, mit welcher Qualität ein benachbarter Uplink-Knoten mit dem Primär-Netzwerk kommunizieren kann.

In einer bevorzugten Weiterbildung wird diese Information dazu genutzt, die eigenen Möglichkeiten als Uplink-Knoten im Headend-Modus zu fungieren, zu überprüfen. Hierzu ist die Konfigurationseinheit eines Uplink-Knotens vorzugsweise dazu ausgebildet, bei Empfang einer Broadcast-Nachricht eines benachbarten Uplink-Knotens den darin enthaltenen Qualitätskennwert des benachbarten Uplink-Knotens zu extrahieren und den extrahierten Qualitätskennwert mit einem eigenen Qualitätskennwert zu vergleichen. In Abhängigkeit des Ergebnisses des Vergleichs könnte die Konfigurationseinheit die Weiterleitungseinheit zum Aktivieren des Repeater-Modus oder zum Aktivieren bzw. Verbleiben im Headend-Modus veranlassen. Wenn sich der Uplink-Knoten im Headend-Modus befindet und der eigene Qualitätskennwert den Qualitätskennwert des benachbarten Uplink-Knotens um einen vorgegebenen Schwellwert unterschreitet, so könnte die Konfigurationseinheit die Weiterleitungseinheit zum Aktivieren des Repeater-Modus veranlassen. Wenn jeder Uplink-Knoten nach Anschalten oder Zurücksetzen als Grundzustand den Headend-Modus annimmt, so kann auf diese Weise der Uplink-Knoten bestimmt werden, der die beste Verbindung in das Primär-Netzwerk bietet.

Bei einer Entscheidung für den Wechsel vom Headend-Modus in den Repeater-Modus (bzw. eventuell umgekehrt) kann die Konfigurationseinheit eines Uplink-Knotens weitere Informationen nutzen. Derartige Information kann beispielsweise durch vordefinierte Präferenzen gebildet sein, mit denen ein Nutzer oder ein Administrator einen bevorzugten Betriebsmodus vorgeben kann. Zusätzlich oder alternativ können die weiteren Informationen durch Kommunikationskosten gebildet sein. Kommunikationskosten können sämtliche Informationen bezüglich der Verbindungsqualität in dem Sekundär-Netzwerk umfassen. Vorzugsweise gehören hierzu die Anzahl von Hops zwischen einem über das Sekundär-Netzwerk mit dem Uplink-Knoten verbundenen Uplink-Knoten, mögliche Datenraten über das Sekundär-Netzwerk, Latenzzeiten bei der Übertragung in dem Sekundär-Netzwerk, durchschnittliche Anzahl von Sendewiederholungen bei Übertragung von Datenpaketen über das Sekundär-Netzwerk und/oder eine Größe einer Zelle, die durch den Uplink-Knoten im Headend-Modus aufgespannt würde. Besonders wichtigen Aspekten kann dabei bei Bestimmen der Kommunikationskosten ein hoher Einfluss zukommen, während andere Faktoren geringer einfließen. Verfahren zur Bestimmung von Kommunikationskosten sind aus der Praxis hinlänglich bekannt.

In einer Weiterbildung kann ein Uplink-Knoten dazu ausgebildet sein, als Fallback-Headend bestimmt zu werden. Dabei würde die Funktion des Fallback-Headends ebenso unter dem Uplink-Knoten ausgehandelt, wie die Funktion als Headend selbst. Ein Uplink-Knoten kann dann zum Fallback-Headend werden, wenn der Uplink-Knoten die zweitbeste Eignung als Headend aufweist. Auch diese Funktionalität kann bei Verwendung von Broadcast-Nachrichten im zuvor beschriebenen Sinne ausgehandelt werden. Da ein Uplink-Knoten die Broadcast-Nachrichten nicht lediglich von einem Uplink-Knoten empfangen dürfte, können Uplink-Knoten beurteilen, ob sie als Fallback-Headend geeignet wären. Vorzugsweise sendet ein Uplink-Knoten eine Benachrichtigung in das Sekundär-Netzwerk, wenn die Voraussetzungen für das Annehmen der Funktion als Fallback-Headend erfüllt sind.

Prinzipiell ist es denkbar, dass ein Uplink-Knoten eine zuvor vorhandene Verbindung zu dem Primär-Netzwerk verliert. Wenn der betreffende Uplink-Knoten ein Uplink-Knoten im Repeater-Modus ist, ändern sich für den Uplink-Knoten lediglich, dass ein zu versendendes Datenpaket nicht über die erste Schnittstelle, sondern über die zweite Schnittstelle und das Sekundärnetzwerk und einen Uplink-Knoten im Headend-Modus an das Primär-Netzwerk und das Backbone-Netzwerk gesendet wird. Befindet sich der Uplink-Knoten jedoch in einem Headend-Modus, so muss für alle mit diesem Headend verbundenen Knotenpunkte ein neues Headend gefunden werden. Wenn für ein Uplink-Knoten im Headend-Modus die Qualität der Verbindung in das Primär-Netzwerk einen zweiten Grenzwert unterschreitet, so kann zum einen die Weiterleitungseinheit zum Wechsel in den Repeater-Modus veranlasst werden und zum anderen kann über das Sekundär-Netzwerk eine Nachricht versendet werden, die den Wechsel in den Repeater-Modus und das Deaktivieren des Headend-Modus an andere Uplink-Knoten bzw. weitere Netzwerkknoten mitteilen. Auf diese weisen können die Knoten, die zuvor mit dem Uplink-Knoten im Headend-Modus verbunden waren, den Verlust ihres Headends rechtzeitig feststellen und sich mit einem neuen Uplink-Knoten im Headend-Modus verbinden.

Wenn ein Uplink-Knoten als Fallback-Headend bestimmt worden ist, so kann dieses Fallback-Headend sehr zügig die Funktion eines Uplink-Knotens übernehmen, der wegen eines Verlusts einer Verbindung in das Primär-Netzwerk seinen Headend-Modus deaktiviert hat. Sobald ein Uplink-Knoten eine Nachricht über den Wechsel vom Headend-Modus in den Repeater-Modus empfängt, würde der als Fallback-Headend bestimmte Uplink-Knoten vom Repeater-Modus in den Headend-Modus wechseln. Vorzugsweise versendet der neu in den Headend-Modus gewechselte Uplink-Knoten eine Nachricht über seine zweite Schnittstelle, damit sich andere Uplink-Knoten bei dem neuen Headend anmelden können. Auf diese Weise wäre das Sekundär-Netzwerk ohne Aushandeln eines neuen Headends sehr zügig wieder einsatzfähig.

Da sich die Verbindung zu dem Primär-Netzwerk, insbesondere bei Verwendung einer Funktechnologie fortwährend ändern kann, weist ein Uplink-Knoten vorzugsweise eine Uplink-Bewertungseinheit auf, die einen Qualitätskennwert ermittelt, der repräsentativ für die Qualität der Verbindung des Uplink-Knotens zu dem Primär-Netzwerk ist. Dabei ist die Uplink-Bewertungseinheit vorzugsweise kommunizierend mit der Konfigurationseinheit verbunden und kann damit Qualitätskennwerte für die Konfigurationseinheit zur Verfügung stellen. Der Qualitätskennwert für einen Uplink-Knoten wird vorzugsweise periodisch ermittelt, wobei die Periodenlänge, also der zeitliche Abstand zwischen zwei aufeinanderfolgenden Qualitätskennwerten, vorzugsweise kleiner als fünf Minuten, besonders bevorzugter Weise kleiner als 15 Sekunden, ganz besonders bevorzugter Weise kleiner als fünf Sekunden ist. In einem ganz besonders bevorzugten Ausführungsbeispiel ist die Periodenlänge eine Sekunde, so dass einmal pro Sekunde ein Qualitätskennwert ermittelt würde. Dabei kann die Uplink-Bewertungseinheit oder eventuell die Konfigurationseinheit dazu ausgebildet sein, eine Veränderung des Qualitätskennwerts zu ermitteln. Sofern der Qualitätskennwert sich um eine vorgebbare Schwelle verändert, kann beispielsweise das Erzeugen einer Broadcast-Nachricht hinsichtlich der Eignung als Headend oder als Fallback-Headend ausgelöst werden. Auf diese Weise kann die Struktur des Sekundär-Netzwerks fortwährend an aktuelle Verbindungsqualitäten angepasst werden, so dass stets eine möglichst günstige Anbindung an das Backbone-Netzwerk bereitgestellt werden kann.

Ähnlich wie bei der Bewertung der Qualität der Verbindung in das Primär-Netzwerk könnte auch die Verbindung in dem Sekundär-Netzwerk fortwährend bestimmt und beispielsweise die Kommunikationskosten fortwährend bestimmt und aktualisiert werden.

Damit ein Uplink-Knoten seine Umgebung kennt, kann ein Uplink-Knoten zum periodischen Aussenden von Topologie-Nachrichten ausgebildet sein. Damit teilt ein Uplink-Knoten Informationen über seine Umgebung mit und erhält gleichzeitig entsprechende Informationen von anderen Uplink-Knoten. Auf diese Weise kann ein Uplink-Knoten aus empfangenen Topologie-Nachrichten ein Bild über die über das Sekundär-Netzwerk vorhandenen Uplink-Knoten oder weiteren Systemknoten erhalten. Vorzugsweise enthält eine Topologie-Nachricht eine Kennung des Uplink-Knotens selbst, alle sichtbaren Uplink-Knoten, einen Qualitätskennwert für die Verbindung zu dem Primär-Netzwerk, einen Qualitätskennwert für die Verbindung zu dem Sekundär-Netzwerk, einen Qualitätskennwert zur Beurteilung der Kommunikation mit sichtbaren Uplink-Knoten und/oder weitere Informationen über die Kommunikationsfähigkeit in dem Primär-Netzwerk. Diese Topologie-Nachrichten erlauben beispielsweise Routing-Pläne zu erstellen und Kommunikationskosten zu berechnen.

Prinzipiell gibt es verschiedene Möglichkeiten, wie Uplink-Knoten untereinander den jeweils besten Betriebsmodus eines Uplink-Knotens bestimmen können. In einer besonders bevorzugten Ausgestaltung werden jedoch sämtliche Uplink-Knoten zunächst in einem Headend-Modem für das Sekundär-Netzwerk versetzt. Alle Uplink-Knoten werden damit zu Headend-Kandidaten, d.h. jeder Uplink-Knoten könnte prinzipiell ein Headend für das Sekundär-Netzwerk werden. Das Versetzen der Uplink-Knoten in den Headend-Modus erfolgt vorzugsweise beim Zurücksetzen eines Uplink-Knotens oder beim Anschalten eines Uplink-Knotens. Auf diese Weise kann beispielsweise zentral von einem Managementrechner aus über entsprechende Initialisierungsnachrichten gezielt ein Zurückweisen der Uplink-Knoten herbeigeführt werden und damit ein Neuinitialisieren der Struktur des Sekundär-Netzwerks ausgelöst werden.

In einem nächsten Schritt würden alle Uplink-Knoten einen Qualitätskennwert erzeugen, der jeweils repräsentativ für die Verbindung des Uplink-Knotens zu dem Primär-Netzwerk ist. Wenn der derart bestimmte Qualitätskennwert eines Uplink-Knotens einen ersten Grenzwert überschreitet, würde eine Broadcast-Nachricht erzeugt und versendet, die den jeweiligen Qualitätskennwert enthält. Der eine Broadcast-Nachricht versendende Uplink-Knoten bleibt im Headend-Modus und ist weiterhin ein Headend-Kandidat.

Sofern ein erzeugter Qualitätskennwert einen zweiten Grenzwert unterschreitet, würde der betreffende Uplink-Knoten in den Repeater-Modus versetzt und aus der Liste der Headend-Kandidaten gestrichen. Auf diese Weise reduziert sich die Anzahl der Headend-Kandidaten bereits.

In einem nächsten Schritt würde jeder Uplink-Knoten, der sich nach wie vor in einem Headend-Modus befindet und eine Broadcast-Nachricht von einem benachbarten Uplink-Knoten erhält, den in der Broadcast-Nachricht empfangenen Qualitätskennwert mit einem eigenen Qualitätskennwert vergleichen. Unterschreitet der eigene Qualitätskennwert den Qualitätskennwert aus der empfangenen Broadcast-Nachricht um einen vorgegebenen Schwellwert, so kann der betreffende Uplink-Knoten in den Repeater-Modus versetzt werden und aus der Liste der Headend-Kandidaten gestrichen werden. Prinzipiell wäre es jedoch auch denkbar, dass - bei Definition eines Fallback-Headends - der Uplink-Knoten als Fallback-Knoten behalten wird. Insgesamt werden die Schritte so lange wiederholt, bis ein Headend-Kandidat verbleibt, der den höchsten Qualitätskennwert unter allen Headend-Kandidaten aufweist. Alle weiteren Headend-Kandidaten werden nach und nach in den Repeater-Modus versetzt. Dieses Aushandeln kann binnen weniger Minuten erfolgen.

Damit ein Uplink-Knoten weiterhin erfährt, dass ein Headend-Kandidat weiterhin als Headend zur Verfügung steht, kann die Broadcast-Nachricht periodisch wiederholt werden, beispielsweise alle 30 Sekunden oder alle 5 Minuten.

Es gibt nun verschiedene Möglichkeiten, die Lehre der vorliegenden Erfindung in vorteilhafter Weise auszugestalten und weiterzubilden. Dazu ist einerseits auf die dem Anspruch 1 bzw. 4 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen in schematischen Darstellungen
- Fig. 1: ein Ausführungsbeispiel eines erfindungsgemäßen Systems in einem Ursprungszustand, bei dem sich alle Uplink-Knoten in einem Headend-Modus befinden,
- Fig. 2: das Ausführungsbeispiel nach Fig. 1, bei dem ein Uplink-Knoten in den Headend-Modus und alle weiteren Uplink-Knoten in den Repeater-Modus geschaltet sind,
- Fig. 3: das Ausführungsbeispiel nach Fig. 2, bei dem ein Uplink-Knoten im Repeater-Modus seine Verbindung zum Primär-Netzwerk verliert, und
- Fig. 4: das Ausführungsbeispiel nach Fig. 3, bei dem zusätzlich der Uplink-Knoten im Headend-Modus seine Verbindung zum Primär-Netzwerk verloren hat.

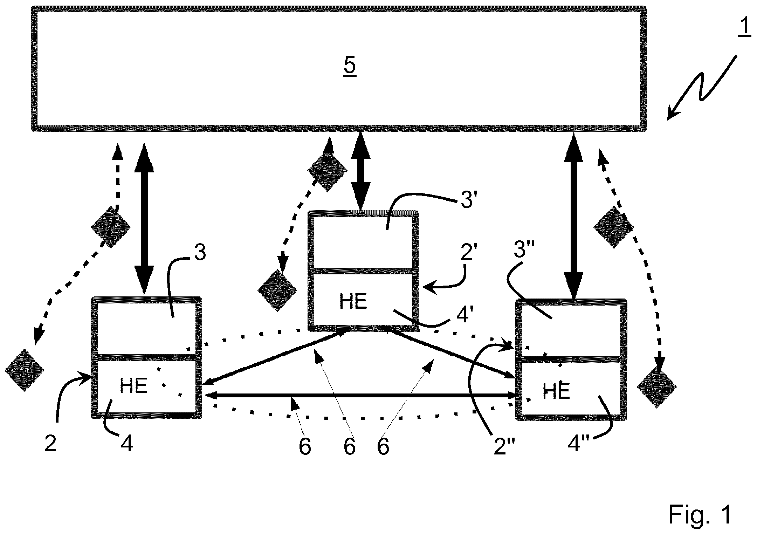

Fig. 1 zeigt eine schematische Darstellung eines Ausführungsbeispiels eines erfindungsgemäßen Systems. Das System 1 weist drei Uplink-Knoten 2, 2' und 2" auf, von denen jeder eine erste Schnittstelle 3, 3', 3" und eine zweite Schnittstelle 4, 4', 4" aufweist. Der Einfachheit wegen sind die Uplink-Knoten 2, 2' und 2" als Rechtecke dargestellt, die einen waagrechten Strich in der Mitte aufweisen. Die obere Hälfte soll die erste Schnittstelle 3, 3', 3" andeuten, die untere Hälfte die zweite Schnittstelle 4, 4', 4".

In dem in Fig. 1 dargestellten Ausführungsbeispiel weist jeder Uplink-Knoten 2, 2', 2" eine Verbindung zu einem Primär-Netzwerk 5 auf, das in dem dargestellten Ausführungsbeispiel durch ein Mobilfunknetz ausgebildet ist. Das Primär-Netzwerk stellt eine Verbindung zu einem Backbone-Netzwerk her, über das eine Kommunikation mit einem entfernten Endgerät (beispielsweise einem Server) möglich ist. Die Verbindung zu dem Primär-Kommunikationsnetzwerk 5 wird von jedem Uplink-Knoten 2, 2', 2" über seine erste Schnittstelle 3, 3', 3" aufgebaut. Die Möglichkeit mit dem Primär-Netzwerk 5 Daten auszutauschen sind durch Doppelpfeile dargestellt, d.h. jeder Uplink-Knoten 2, 2', 2" ist in dem Ausführungsbeispiel nach Fig. 1 in der Lage, über seine erste Schnittstelle 3, 3', 3" Datenpakete an das Primär-Netzwerk 5 zu senden und Datenpakete aus dem Primär-Netzwerk 5 zu empfangen. Gleichzeitig sind die zweiten Schnittstellen 4, 4', 4" über ein Sekundär-Netzwerk 6 untereinander verbunden, wobei das Sekundär-Netzwerk 6 durch BPL oder PLC gebildet ist. Vorzugsweise kommt hier die Breitbandvariante BPL zum Einsatz. Die Kommunikationsfähigkeit zwischen den einzelnen Uplink-Knoten 2, 2', 2" über das Sekundär-Netzwerk ist ebenso durch Doppelpfeile dargestellt.

In dem Ursprungszustand, der in Fig. 1 dargestellt ist, befindet sich jeder Uplink-Knoten 2, 2', 2" im Headend-Modus, was durch die Buchstaben "HE" im unteren Rechteck der Uplink-Knoten angedeutet ist. Der Ursprungszustand kann beispielsweise durch im Wesentlichen gleichzeitiges Einschalten der Uplink-Knoten erreicht werden. Allerdings könnte auch über das Sekundär-Netzwerk 6 ein Rücksetzsignal gesendet werden, das die Uplink-Knoten 2, 2', 2" in den Ursprungszustand versetzt.

Da es bei den drei in Fig. 1 dargestellten Uplink-Knoten 2, 2', 2" nicht sinnvoll ist, alle Uplink-Knoten 2, 2', 2" im Headend-Modus zu betreiben, wird der Uplink-Knoten bestimmt, der sich am besten als Headend eignet. Hierzu bestimmt jeder Uplink-Knoten einen Qualitätskennwert, der repräsentativ für die Qualität der Verbindung zu dem Primär-Netzwerk 5 ist. Dieser Qualitätskennwert wird zum Bestandteil einer Broadcast-Nachricht gemacht, wenn der Qualitätskennwert einen ersten Grenzwert überschreitet. Die Broadcast-Nachricht wird über die zweite Schnittstelle an das Sekundär-Netzwerk 6 gesendet. Unterschreitet ein Qualitätskennwert einen zweiten Grenzwert, so ist der Uplink-Knoten für den Betrieb im Headend-Modus nicht geeignet und schaltet in den Repeater-Modus. Der Uplink-Knoten ist damit kein Headend-Kandidat mehr.

Wenn ein Uplink-Knoten, dessen Qualitätskennwert einen ersten Grenzwert überschreitet, eine Broadcast-Nachricht von einem benachbarten Uplink-Knoten empfängt, extrahiert dieser Uplink-Knoten den in der Broadcast-Nachricht enthaltenen Qualitätskennwert und vergleicht den empfangenen Qualitätskennwert mit dem eigenen Qualitätskennwert. Überschreitet der empfangene Qualitätskennwert den eigenen Qualitätskennwert um eine vorgegebene Schwelle, so deaktiviert der Uplink-Knoten den Headend-Modus und aktiviert den Repeater-Modus. Wenn jeder Uplink-Knoten auf diese Weise Broadcast-Nachrichten bzw. den eigenen Qualitätskennwert aufwertet, so kann der Headend-Kandidat bestimmt werden, der einen höchsten Qualitätskennwert aufweist. Dieser Headend-Kandidat mit dem höchsten Qualitätskennwert verbleibt in dem Headend-Modus, während alle weiteren Headend-Kandidaten in den Repeater-Modus versetzt werden.

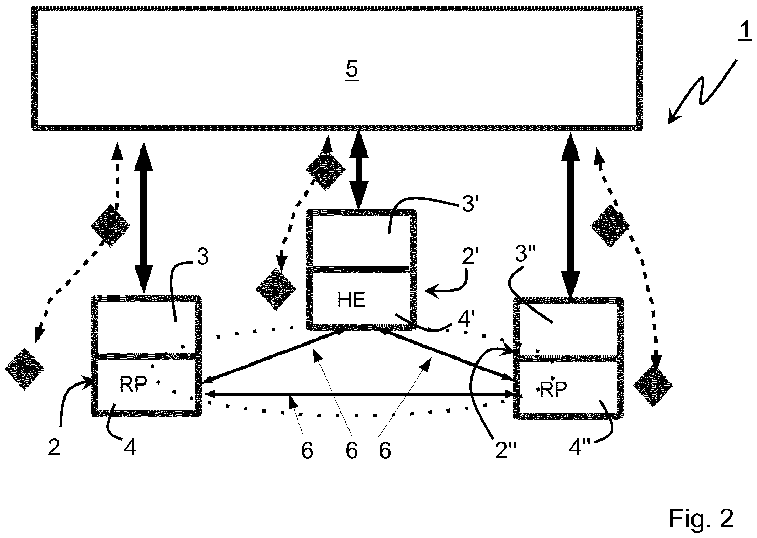

Der Zustand, der nach einem derartigen Aushandeln des Betriebszustands verbleibt, ist in Fig. 2 dargestellt. Uplink-Knoten 2 und 2" sind in den Repeater-Modus versetzt, was durch die Kennzeichnung "RP" gekennzeichnet ist. Uplink-Knoten 2" verbleibt im Headend-Modus und erfüllt die Funktion als Headend, wie sie in aus der Praxis bekannten BPL- bzw. PLC-Netzwerken üblich ist. Alle Uplink-Knoten im Repeater-Modus und evtl. weitere BPL- oder PLC-Knoten, die einen Uplink-Knoten im Headend-Modus als geeignetes Headend auffassen, verbinden sich mit dem entsprechenden Uplink-Knoten im Headend-Modus. Damit ist das Sekundär-Netzwerk für eine Kommunikation zwischen den Uplink-Knoten vorbereitet. Bei den in Fig. 1 und 2 dargestellten Konstellationen ist die Qualität zu dem Primär-Netzwerk allerdings ausreichend, um zu versendende Datenpakete über das Primär-Netzwerk zu leiten. Dieser Austausch von Datenpaketen ist durch gestrichelte Doppelpfeile angedeutet, wobei Rauten ausgetauschte Datenpakete symbolisieren.

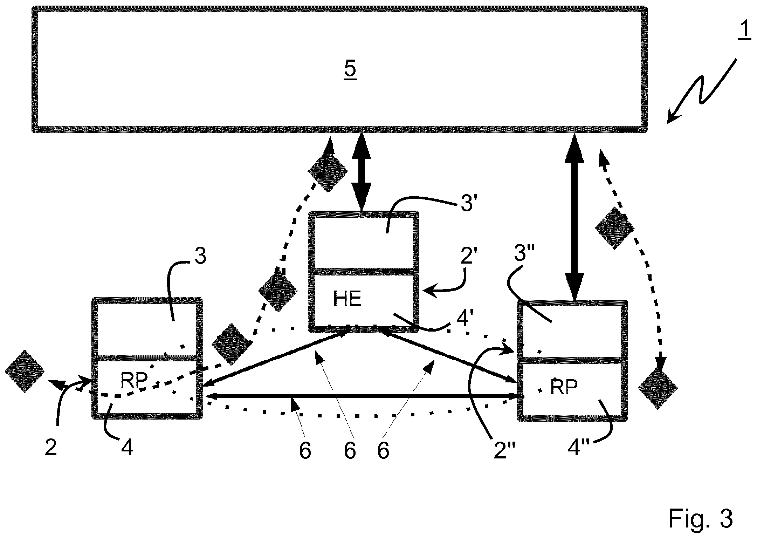

Fig. 3 stellt eine Ausführung dar, bei der die Qualität der Verbindung zwischen Uplink-Knoten 2 und Primär-Netzwerk 6 einen Grenzwert unterschreitet. Damit urteilt der Uplink-Knoten 2, dass zu versendende Datenpakete nicht mehr mit ausreichender Qualität in das Primär-Netzwerk 6 versendet werden können. Zu versendende Datenpakete sendet Uplink-Knoten 2 daher über seine zweite Schnittstelle 4 und das Sekundär-Netzwerk 6 an den Uplink-Knoten 2', der sich im Headend-Modus befindet. Uplink-Knoten 2' sendet das über seine zweite Schnittstelle empfangene Datenpaket über seine erste Schnittstelle an das Primär-Netzwerk 5 und damit an das Backbone-Netzwerk. Auf diese Weise ist trotz Ausfall der Verbindung des Uplink-Knotens 2 in das Primär-Netzwerk 5 eine Kommunikation des Uplink-Knotens 2 mit dem Backbone-Netzwerk möglich.

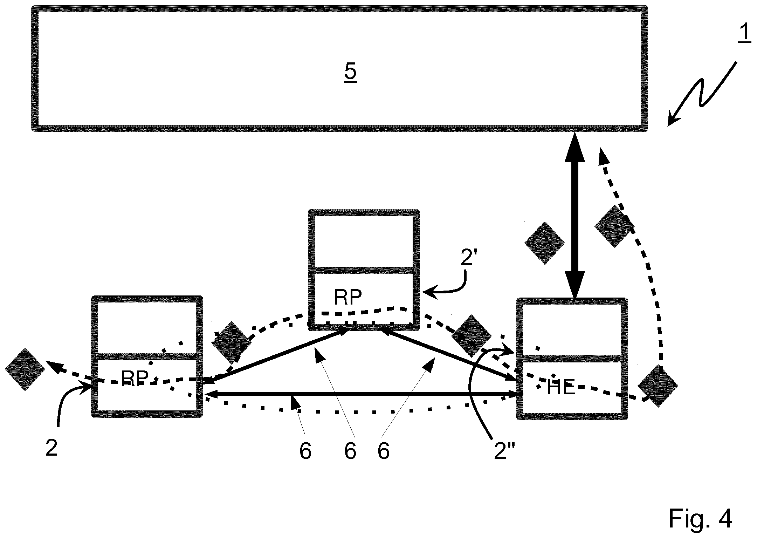

Neben dem Ausfall einer Kommunikationsverbindung eines Uplink-Knotens im Repeater-Modus kann auch die Kommunikationsverbindung eines Uplink-Knotens im Headend-Modus verloren gehen. In diesem Fall muss ein neues Headend gefunden werden. Dies kann entweder dadurch geschehen, dass bereits beim Aushandeln der Headend-Funktion unter den Uplink-Knoten ein Fallback-Headend bestimmt wird oder dass bei Ausfall der Kommunikationsverbindung in das Primär-Netzwerk bei dem Uplink-Knoten 2' im Headend-Modus ein neues Aushandeln der Headend-Funktion angestoßen wird. Fig. 4 stellt das Ergebnis eines neuen Aushandelns dar: Uplink-Knoten 2' ist in den Repeater-Modus versetzt und Uplink-Knoten 2" hat den Headend-Modus aktiviert. Da in dem in Fig. 4 dargestellten Fall nun weder Uplink-Knoten 2 noch Uplink-Knoten 2' eine Verbindung in das Primär-Netzwerk aufweisen, nutzen Uplink-Knoten 2 und 2' jeweils ihre zweite Schnittstelle und das Sekundär-Netzwerk 6, um Datenpakete in das Primär-Netzwerk 5 und das damit verbundene Backbone-Netzwerk zu senden. Ein derartiger Fall ist durch Rauten bei den gestrichelten Doppelpfeilen zu erkennen: Uplink-Knoten 2 sendet Datenpakete über Uplink-Knoten 2' an Uplink-Knoten 2", der die Datenpakete an das Primär-Netzwerk weiterleitet. Die Tatsache, dass Uplink-Knoten 2" selbst Datenpakete in das Primär-Netzwerk senden kann, ist durch ein rautenförmiges Symbol links neben dem durchgezogenen Doppelpfeil zwischen Primär-Netzwerk 5 und Uplink-Knoten 2" dargestellt.

Hinsichtlich weiterer vorteilhafter Ausgestaltungen des erfindungsgemäßen Systems und Uplink-Knotens und der erfindungsgemäßen Verfahren wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: System
- 2, 2', 2": Uplink-Knoten
- 3, 3', 3": Erste Schnittstelle
- 4, 4', 4": Zweite Schnittstelle
- 5: Primär-Netzwerk
- 6: Sekundär-Netzwerk

## Patentansprüche

1. System zur redundanten Anbindung eines Daten erzeugenden Geräts an ein Backbone-Netzwerk umfassend:
ein Primär-Netzwerk (5), das einen Austausch von Datenpaketen mit dem Backbone-Netzwerk ermöglicht,
ein Sekundär-Netzwerk (6), das mittels PLC - Power-Line Communication - oder mittels BPL - Breitband Power-Line - auf einem Energieversorgungsnetzwerk ausgebildet ist,
mindestens ein Daten erzeugendes Gerät, das zum Erzeugen von zu versendenden Datenpaketen zur Übertragung an das Backbone-Netzwerk ausgebildet ist,
mehrere Uplink-Knoten (2, 2', 2"), die jeweils eine erste Schnittstelle (3, 3', 3") zur Kommunikation mit dem Primär-Netzwerk (5) und eine zweite Schnittstelle (4, 4', 4") zur Kommunikation mit dem Sekundär-Netzwerk (6) aufweisen, wobei die Uplink-Knoten (2, 2', 2") dazu ausgebildet sind, für das Sekundär-Netzwerk (6) in einen Repeater-Modus (RP) oder in einen Headend-Modus (HE) zu schalten, wobei ein Schalten in den Repeater-Modus (RP) oder in den Headend-Modus (HE) zwischen den Uplink-Knoten (2, 2', 2") ausgehandelt wird und wobei mindestens einer der Uplink-Knoten (2, 2', 2") im Headend-Modus (HE) betrieben ist,
wobei jeder Uplink-Knoten (2, 2', 2") zudem dazu ausgebildet ist, ein zu versendendes Datenpaket über die erste Schnittstelle (3, 3', 3") an das Primär-Netzwerk (5) oder - bei Unterschreiten eines Grenzwerts durch die Qualität der Verbindung zu dem Primär-Netzwerk (5) - über die zweite Schnittstelle (4, 4', 4") an das Sekundär-Netzwerk (6) zu versenden, und
wobei ein Uplink-Knoten (2, 2', 2") im Headend-Modus (HE) ein über dessen zweite Schnittstelle (4, 4', 4") von einem anderen Uplink-Knoten (2, 2', 2") empfangenes Datenpaket über die erste Schnittstelle (3, 3', 3") an das Primär-Netzwerk (5) weiterleitet.

2. System nach Anspruch 1, **dadurch gekennzeichnet, dass** eines des mindestens einen Daten erzeugenden Geräts gleichzeitig einer der Uplink-Knoten (2, 2', 2") ist.

3. System nach Anspruch 1 oder 2, **gekennzeichnet durch** mindestens ein Endgerät, das kommunizierend mit einem der Uplink-Knoten (2, 2', 2") verbunden ist, wobei das mindestens eine Endgerät das mindestens eine Daten erzeugende Gerät bildet.

4. System nach einem der Ansprüche 1 bis 3, **dadurch gekennzeichnet, dass** die mehreren Uplink-Knoten (2, 2', 2") beim Aushandeln des Betriebsmodus zum Ausführen der folgenden Schritte ausgebildet sind:
Versetzen der Uplink-Knoten (2, 2', 2") in einen Headend-Modus (HE) für das Sekundär-Netzwerk (6), wodurch alle Uplink-Knoten (2, 2', 2") Headend-Kandidaten werden,
Erzeugen eines Qualitätskennwerts, der repräsentativ für die Verbindung des Uplink-Knotens (2, 2', 2") zu dem Primär-Netzwerk (5) ist, bei jedem Uplink-Knoten (2, 2', 2"),
Versenden einer Broadcast-Nachricht über die zweite Schnittstelle (4, 4', 4") durch die Uplink-Knoten (2, 2', 2"), deren Qualitätskennwert einen ersten Grenzwert überschreitet, wobei die Broadcast-Nachricht den jeweiligen Qualitätskennwert enthält,
Versetzen der Uplink-Knoten (2, 2', 2") in einen Repeater-Modus (RP), deren Qualitätskennwert einen zweiten Grenzwert unterschreitet, und Entfernen dieser Uplink-Knoten (2, 2', 2") von den Headend-Kandidaten,
Vergleichen eines Qualitätskennwerts eines Headend-Kandidaten mit einem über eine Broadcast-Nachricht empfangenen Qualitätskennwert und
Bestimmen des Headend-Kandidaten, der einen höchsten Qualitätskennwert aufweist, wobei dieser Headend-Kandidat Headend wird und weitere Headend-Kandidaten in den Repeater-Modus (RP) versetzt werden.

5. Uplink-Knoten zum Ermöglichen einer redundanten Anbindung eines Daten erzeugenden Geräts an ein Backbone-Netzwerk, mit:
einer ersten Schnittstelle (3, 3', 3"), die zur Kommunikation mit einem Primär-Netzwerk (5) ausgebildet ist, wobei über die erste Schnittstelle (3, 3', 3") und das Primär-Netzwerk (5) ein Austausch von Datenpaketen mit dem Backbone-Netzwerk ermöglicht ist,
einer zweiten Schnittstelle (4, 4', 4"), die zur Kommunikation mit einem Sekundär-Netzwerk (6) ausgebildet ist, wobei das Sekundär-Netzwerk (6) mittels PLC - Power-Line Communication - oder mittels BPL - Breitband Power-Line - auf einem Energieversorgungsnetzwerk ausgebildet ist,
einer Routingeinheit, die dazu ausgebildet ist, ein zu versendendes Datenpaket des Daten erzeugenden Geräts bei Überschreiten eines ersten Grenzwertes durch die Qualität der Verbindung zu dem Primär-Netzwerk (5) an die erste Schnittstelle (3, 3', 3") zu leiten und bei Unterschreiten eines zweiten Grenzwertes durch die Qualität der Verbindung zu dem Primär-Netzwerk (5) an die zweite Schnittstelle (4, 4', 4") zu leiten,
einer Weiterleitungseinheit, die in einen Repeater-Modus (RP) oder einen Headend-Modus (HE) versetzbar ist und die kommunizierend mit der ersten und der zweiten Schnittstelle (3, 3', 3", 4, 4', 4") verbunden und dazu ausgebildet ist, in dem Repeater-Modus (RP) ein über die zweite Schnittstelle (4, 4', 4") empfangenes Datenpaket wieder über die zweite Schnittstelle (4, 4', 4") an das Sekundär-Netzwerk (6) weiterzuleiten und in dem Headend-Modus (HE) ein über die zweite Schnittstelle (4, 4', 4") empfangenes Datenpaket über die erste Schnittstelle (3, 3', 3") an das Primär-Netzwerk (5) weiterzuleiten, und
einer Konfigurationseinheit, die zum Aushandeln eines Betriebsmodus der Weiterleitungseinheit mit anderen Uplink-Knoten (2, 2', 2") ausgebildet ist und die abhängig von einem Ergebnis des Aushandelns die Weiterleitungseinheit zum Aktivieren des Repeater-Modus (RP) oder zum Aktivieren des Headend-Modus (HE) veranlasst.

6. Uplink-Knoten nach Anspruch 5, **gekennzeichnet durch** eine Datenerzeugungseinheit, die zum Erzeugen von Daten und zum Paketieren der Daten in zu versendende Datenpakete ausgebildet ist, wobei die Datenerzeugungseinheit kommunizierend mit der Routingeinheit verbunden ist.

7. Uplink-Knoten nach Anspruch 5 oder 6, **gekennzeichnet durch** eine dritte Schnittstelle, über die ein Endgerät, das zu versendende Datenpakete an den Uplink-Knoten (2, 2', 2") sendet, mit dem Uplink-Knoten verbindbar ist, wobei die dritte Schnittstelle kommunizierend mit der Routingeinheit verbunden ist.

8. Uplink-Knoten nach einem der Ansprüche 5 bis 7, **dadurch gekennzeichnet, dass** die Weiterleitungseinheit dazu ausgebildet ist, als Grundzustand den Headend-Modus (HE) anzunehmen, wobei der Grundzustand nach Anschalten und/oder nach Zurücksetzen des Uplink-Knotens (2, 2', 2") angenommen wird.

9. Uplink-Knoten nach einem der Ansprüche 5 bis 8, der dazu ausgebildet ist, eine Broadcast-Nachricht über die zweite Schnittstelle (4, 4', 4") an das Sekundär-Netzwerk (6) zu senden, wenn die Qualität der Verbindung zu dem Primär-Netzwerk (5) den ersten Grenzwert überschreitet, wobei mittels der Broadcast-Nachricht innerhalb des Sekundär-Netzwerks (6) benachbarten Uplink-Knoten (2, 2', 2") die Bereitschaft zur Funktion als Headend signalisiert wird und wobei eine Broadcast-Nachricht einen Qualitätskennwert enthält, der repräsentativ für die Qualität der Verbindung zu dem Primär-Netzwerk (5) ist, wobei die Konfigurationseinheit dazu ausgebildet ist, bei Empfang einer Broadcast-Nachricht eines benachbarten Uplink-Knotens (2, 2', 2") den darin enthaltenen Qualitätskennwert des benachbarten Uplink-Knotens (2, 2', 2") zu extrahieren und mit einem eigenen Qualitätskennwert zu vergleichen.

10. Uplink-Knoten nach einem der Ansprüche 5 bis 9, **dadurch gekennzeichnet, dass** die Konfigurationseinheit dazu ausgebildet ist, bei einer Entscheidung für einen Wechsel vom Headend-Modus (HE) in den Repeater-Modus (RP) vordefinierte Präferenzen und/oder Kommunikationskosten zu berücksichtigen, wobei die Kommunikationskosten Informationen bezüglich der Verbindungsqualität in dem Sekundär-Netzwerk (6) beinhalten.

11. Uplink-Knoten nach einem der Ansprüche 5 bis 10, **gekennzeichnet durch** die Fähigkeit als Fallback-Headend bestimmt zu werden, wobei ein Bestimmen des Fallback-Headend unter den Uplink-Knoten (2, 2', 2") ausgehandelt wird.

12. Uplink-Knoten nach einem der Ansprüche 5 bis 11, **dadurch gekennzeichnet, dass** die Konfigurationseinheit dazu ausgebildet ist, bei einem aktivierten Headend-Modus (HE) und bei Unterschreiten des zweiten Grenzwertes durch die Qualität der Verbindung in das Primär-Netzwerk (5) die Weiterleitungseinheit zum Wechsel in den Repeater-Modus (RP) zu veranlassen und über das Sekundär-Netzwerk (6) eine Nachricht über den Wechsel an andere Uplink-Knoten (2, 2', 2") und gegebenenfalls weitere Netzwerk-Knoten zu senden.

13. Uplink-Knoten nach Anspruch 11 und 12, **dadurch gekennzeichnet, dass** der Uplink-Knoten (2, 2', 2") dazu ausgebildet ist, in den Headend-Modus (HE) zu wechseln, wenn der Uplink-Knoten (2, 2', 2") als Fallback-Headend bestimmt ist und eine Nachricht über den Wechsel des Headends in den Repeater-Modus (RP) empfängt.

14. Uplink-Knoten nach einem der Ansprüche 5 bis 13, **gekennzeichnet durch** eine Uplink-Bewertungseinheit, die zum Ermitteln eines Qualitätskennwerts ausgestaltet ist, der repräsentativ für die Qualität der Verbindung des Uplink-Knotens (2, 2', 2") zu dem Primär-Netzwerk (5) ist, wobei die Uplink-Bewertungseinheit kommunizierend mit der Konfigurationseinheit verbunden ist und den Qualitätskennwert ermittelt.

15. Uplink-Knoten nach einem der Ansprüche 5 bis 14, **dadurch gekennzeichnet, dass** der Uplink-Knoten (2, 2', 2") zum Aussenden von Topologie-Nachrichten ausgebildet ist, wobei eine Topologie-Nachricht eine Kennung des Uplink-Knotens (2, 2', 2"), sichtbare benachbarte Uplink-Knoten (2, 2', 2"), einen Qualitätskennwert für die Verbindung zu dem Primär-Netzwerk (5) und/oder einen Qualitätskennwert für die Verbindung zu dem Sekundär-Netzwerk (6) enthält.

16. Verfahren zur redundanten Kommunikation mit einem Backbone-Netzwerk zum Betrieb eines Systems nach einem der Ansprüche 1 bis 4, wobei zum Versenden von Datenpaketen an das Backbone-Netzwerk und Empfangen von Datenpaketen von dem Backbone-Netzwerk ein Primär-Netzwerk (5) genutzt wird, wobei das System (1) mehrere Uplink-Knoten (2, 2', 2") aufweist und wobei die Uplink-Knoten (2, 2', 2") für ein Sekundär-Netzwerk (6) in einen Repeater-Modus (RP) oder einen Headend-Modus (HE) schaltbar sind, umfassend die Schritte:
Empfangen oder Erzeugen eines zu versendenden Datenpakets durch einen ersten Uplink-Knoten und
Versenden des zu versendenden Datenpakets über eine erste Schnittstelle des ersten Uplink-Knotens an das Primär-Netzwerk (5), wenn ein erster Grenzwert durch die Qualität der Verbindung zu dem Primär-Netzwerk (5) überschritten wird, oder über eine zweite Schnittstelle des ersten Uplink-Knotens an ein Sekundär-Netzwerk (6), wenn ein zweiter Grenzwert durch die Qualität der Verbindung zu dem Primär-Netzwerk (5) unterschritten wird, wobei das Sekundär-Netzwerk (6) mittels PLC - Power-Line Communication - oder mittels BPL - Breitband Power-Line - auf einem Energieversorgungsnetzwerk ausgebildet ist,
wobei bei Versenden des zu versendenden Datenpakets über die zweite Schnittstelle zusätzlich die Schritte ausgeführt werden:
Übertragen des zu versendenden Datenpakets über das Sekundär-Netzwerk (6) an einen zweiten Uplink-Knoten, der in einem Headend-Modus betrieben wird und mit dem Sekundär-Netzwerk (6) verbunden ist, wobei das zu versendende Datenpaket während des Übertragens durch einen oder mehre Uplink-Knoten (2, 2', 2") in einem Repeater-Modus weitergeleitet werden kann, wobei ein Schalten in den Repeater-Modus (RP) oder in den Headend-Modus (HE) zwischen den Uplink-Knoten (2, 2', 2") ausgehandelt wird und wobei mindestens einer der Uplink-Knoten (2, 2', 2") im Headend-Modus (HE) betrieben wird,
Empfangen des zu versendenden Datenpakets durch den zweiten Uplink-Knoten,
Weiterleiten des zu versendenden Datenpakets durch den zweiten Uplink-Knoten an dessen erste Schnittstelle und
Versenden des zu versendenden Datenpakets an das Primär-Netzwerk (5).

## Claims

1. System for the redundant connection of a data-producing device to a backbone network, comprising:
a primary network (5) which enables an exchange of data packets with the backbone network,
a secondary network (6) which by means of PLC - Power Line Communication - or by means of BPL - Broadband Power Line - is constructed on an energy supply network,
at least one data-producing device which is constructed for producing data packets which are intended to be transmitted for transfer to the backbone network,
a plurality of uplink nodes (2, 2', 2") which each have a first interface (3, 3', 3") for communication with the primary network (5) and a second interface (4, 4', 4") for communication with the secondary network (6), wherein the uplink nodes (2, 2', 2") are constructed for the secondary network (6) to switch into a repeater mode (RP) or a headend mode (HE), wherein switching into the repeater mode (RP) or into the headend mode (HE) is negotiated between the uplink nodes (2, 2', 2") and wherein at least one of the uplink nodes (2, 2', 2") is operated in the headend mode (HE),
wherein each uplink node (2, 2', 2") is additionally constructed to transmit a data packet which is intended to be transmitted via the first interface (3, 3', 3") to the primary network (5) or - when a value falls below a limit value as a result of the quality of the connection to the primary network (5) - via the second interface (4, 4', 4") to the secondary network (6), and
wherein an uplink node (2, 2', 2") forwards in the headend mode (HE) a data packet which is received via the second interface (4, 4', 4") thereof from another uplink node (2, 2', 2") via the first interface (3, 3', 3") to the primary network (5).

2. System according to claim 1, **characterised in that** one of the at least one data-producing devices is at the same time one of the uplink nodes (2, 2', 2").

3. System according to claim 1 or 2, **characterised by** at least one terminal which is connected so as to communicate with one of the uplink nodes (2, 2', 2"), wherein the at least one terminal forms the at least one data-producing device.

4. System according to any one of claims 1 to 3, **characterised in that** the plurality of uplink nodes (2, 2', 2") during the negotiation of the operating mode are constructed to carry out the following steps:
transferring the uplink nodes (2, 2', 2") into a headend mode (HE) for the secondary network (6), whereby all the uplink nodes (2, 2', 2") become headend candidates, producing a quality parameter which is representative of the connection of the uplink node (2, 2', 2") to the primary network (5) for each uplink node (2, 2', 2"),
sending a broadcast notification via the second interface (4, 4', 4") via the uplink nodes (2, 2', 2") whose quality parameter exceeds a first limit value, wherein the broadcast notification contains the respective quality parameter,
transferring the uplink nodes (2, 2', 2") whose quality parameter falls below a second limit value into a repeater mode (RP) and removing these uplink nodes (2, 2', 2") from the headend candidates,
comparing a quality parameter of a headend candidate with a quality parameter which is received via a broadcast notification, and
determining the headend candidate which has the highest quality parameter, wherein this headend candidate becomes headend and other headend candidates are transferred into the repeater mode (RP).

5. Uplink node for enabling a redundant connection of a data-producing device to a backbone network, having:
a first interface (3, 3', 3") which is constructed for communication with a primary network (5), wherein via the first interface (3, 3', 3") and the primary network (5) an exchange of data packets with the backbone network is enabled, a second interface (4, 4', 4") which is constructed for communication with a secondary network (6), wherein the secondary network (6) by means of PLC - Power Line Communication - or by means of BPL - Broadband Power Line - is constructed on an energy supply network,
a routing unit which is constructed to direct a data packet of the data-producing device which is intended to be transmitted to the first interface (3, 3', 3") when a first limit value is exceeded as a result of the quality of the connection to the primary network (5) and to direct it to the second interface (4, 4', 4") when a value falls below a second limit value as a result of the quality of the connection to the primary network (5),
a forwarding unit which can be transferred into a repeater mode (RP) or a headend mode (HE) and which is connected so as to communicate with the first interface and the second interface (3, 3', 3", 4, 4', 4") and which is constructed to forward in the repeater mode (RP) a data packet which is received via the second interface (4, 4', 4") again via the second interface (4, 4', 4") to the secondary network (6) and to forward in the headend mode (HE) a data packet which is received via the second interface (4, 4', 4") via the first interface (3, 3', 3") to the primary network (5), and a configuration unit which is constructed to negotiate an operating mode of the forwarding unit with other uplink nodes (2, 2', 2") and which in accordance with a result of the negotiation causes the forwarding unit to activate the repeater mode (RP) or to activate the headend mode (HE).

6. Uplink node according to claim 5, **characterised by** a data production unit which is constructed to produce data and to packetise the data in data packets which are intended to be transmitted, wherein the data production unit is connected so as to communicate with the routing unit.

7. Uplink node according to claim 5 or 6, **characterised by** a third interface via which a terminal which transmits the data packet which is intended to be transmitted to the uplink nodes (2, 2', 2") can be connected to the uplink node, wherein the third interface is connected so as to communicate with the routing unit.

8. Uplink node according to any one of claims 5 to 7, **characterised in that** the forwarding unit is constructed to assume the headend mode (HE) as a basic state, wherein the basic state is assumed after switching on and/or after resetting the uplink node (2, 2', 2").

9. Uplink node according to any one of claims 5 to 8, which is constructed to transmit a broadcast notification via the second interface (4, 4', 4") to the secondary network (6) if the quality of the connection to the primary network (5) exceeds the first limit value, wherein by means of the broadcast notification within the secondary network (6) the readiness to function as a headend is signalled to adjacent uplink nodes (2, 2', 2") and wherein a broadcast notification contains a quality parameter which is representative of the quality of the connection to the primary network (5), wherein the configuration unit is constructed upon receipt of a broadcast notification of an adjacent uplink node (2, 2', 2") to extract the quality parameter of the adjacent uplink node (2, 2', 2") contained therein and to compare it with an individual quality parameter.

10. Uplink node according to any one of claims 5 to 9, **characterised in that** the configuration unit is constructed during a decision for a change from the headend mode (HE) to the repeater mode (RP) to take into account predefined preferences and/or communication costs, wherein the communication costs contain information relating to the connection quality in the secondary network (6).

11. Uplink node according to any one of claims 5 to 10, **characterised by** the capability to be determined as a fallback headend, wherein a determination of the fallback headend is negotiated among the uplink nodes (2, 2', 2").

12. Uplink node according to any one of claims 5 to 11, **characterised in that** the configuration unit is constructed to cause, for an activated headend mode (HE) and when a value falls below the second limit value as a result of the quality of the connection in the primary network (5), the forwarding unit to change into the repeater mode (RP) and via the secondary network (6) to transmit a notification relating to the change to other uplink nodes (2, 2', 2") and where applicable other network nodes.

13. Uplink node according to claim 11 and claim 12, **characterised in that** the uplink node (2, 2', 2") is constructed to change into the headend mode (HE) when the uplink node (2, 2', 2") is determined as the fallback headend and receives a notification relating to the change of the headend into the repeater mode (RP).

14. Uplink node according to any one of claims 5 to 13, **characterised by** an uplink evaluation unit which is constructed to establish a quality parameter which is representative of the quality of the connection of the uplink node (2, 2', 2") to the primary network (5), wherein the uplink evaluation unit is connected so as to communicate with the configuration unit and establishes the quality parameter.

15. Uplink node according to any one of claims 5 to 14, **characterised in that** the uplink node (2, 2', 2") is constructed to transmit topology notifications, wherein a topology notification contains an identification of the uplink node (2, 2', 2"), visible adjacent uplink nodes (2, 2', 2"), a quality parameter for the connection to the primary network (5) and/or a quality parameter for the connection to the secondary network (6).

16. Method for redundant communication with a backbone network for operating a system according to any one of claims 1 to 4, wherein a primary network (5) is used to send data packets to the backbone network and to receive data packets from the backbone network, wherein the system (1) has a plurality of uplink nodes (2, 2', 2") and wherein the uplink nodes (2, 2', 2") for a secondary network (6) can be switched into a repeater mode (RP) or a headend mode (HE), comprising the steps of:
receiving or producing a data packet which is intended to be transmitted by a first uplink node, and
transmitting the data packet which is intended to be transmitted via a first interface of the first uplink node to the primary network (5) if a first limit value is exceeded as a result of the quality of the connection to the primary network (5) or via a second interface of the first uplink node to a secondary network (6) if a value falls below a second limit value as a result of the quality of the connection to the primary network (5), wherein the secondary network (6) is constructed by means of PLC - Power Line Communication - or by means of BPL - Broadband Power Line - on an energy supply network,
wherein when the data packet which is intended to be transmitted is transmitted via the second interface there are additionally carried out the steps of:
transmitting the data packet which is intended to be transmitted via the secondary network (6) to a second uplink node which is operated in a headend mode and which is connected to the secondary network (6), wherein the data packet which is intended to be transmitted during the transmission can be forwarded by one or more uplink nodes (2, 2', 2") in a repeater mode, wherein a switching into the repeater mode (RP) or into the headend mode (HE) is negotiated between the uplink nodes (2, 2', 2") and wherein at least one of the uplink nodes (2, 2', 2") is operated in the headend mode (HE),
receiving the data packet which is intended to be transmitted by the second uplink node,
forwarding the data packet which is intended to be transmitted by the second uplink nodes to the first interface thereof, and
transmitting the data packet which is intended to be transmitted to the primary network (5).

## Revendications

1. Système pour la liaison redondante d'un appareil générant des données à un réseau dorsal, comprenant :
un réseau primaire (5) qui permet un échange de paquets de données avec le réseau dorsal,
un réseau secondaire (6) qui est constitué d'une PLC (Power-Line Communication) ou d'une BPL (Broadband Power-Line) sur un réseau d'alimentation en énergie,
au moins un appareil générant des données, qui est conçu pour générer des paquets de données à envoyer pour la transmission au réseau dorsal,
plusieurs noeuds de liaison montante (2, 2', 2") qui comprennent chacun une première interface (3, 3', 3") pour la communication avec le réseau primaire (5) et une deuxième interface (4, 4', 4") pour la communication avec le réseau secondaire (6), les noeuds de liaison montante (2, 2', 2") étant conçus pour être commutés, pour le réseau primaire (6), dans un mode Répéteur (RP) ou dans un mode Tête de réseau (HE), une commutation dans le mode Répéteur (RP) ou dans le mode Tête de réseau (HE) étant négociée entre les noeuds de liaison montante (2, 2', 2") et au moins un des noeuds de liaison montante (2, 2', 2") fonctionnant en mode Tête de réseau (HE),
chaque noeud de liaison montante (2, 2', 2") étant en outre conçu pour envoyer un paquet de données à envoyer par l'intermédiaire de la première interface (3, 3', 3") au réseau primaire (5) ou, lors du passage en dessous d'une valeur limite du fait de la qualité de la liaison avec le réseau primaire (5), par l'intermédiaire de la deuxième interface (4, 4', 4") au réseau secondaire (6) et
un noeud de liaison montante (2, 2', 2") transmettant, en mode Tête de réseau (HE), un paquet de données, reçu par l'intermédiaire de sa deuxième interface (4, 4', 4") par un autre noeud de liaison montante (2, 2', 2"), au réseau primaire (5) par l'intermédiaire de la première interface (3, 3', 3").

2. Système selon la revendication 1, **caractérisé en ce qu'**un des au moins un appareil générant des données est en même temps un des noeuds de liaison montante (2, 2', 2").

3. Système selon la revendication 1 ou 2, **caractérisé par** au moins un terminal, qui est relié en communication avec un des noeuds de liaison montante (2, 2', 2"), l'au moins un terminal constituant l'au moins un appareil générant des données.

4. Système selon l'une des revendications 1 à 3, **caractérisé en ce que** les plusieurs noeuds de liaison montante (2, 2', 2") sont conçus, lors de la négociation du mode de fonctionnement, pour l'exécution des étapes suivantes :
passage des noeuds de liaison montante (2, 2', 2") dans un mode Tête de réseau (HE) pour le réseau secondaire (6), tous les noeuds de liaison montante (2, 2', 2") devenant alors des candidats à la tête du réseau,
génération d'une valeur caractéristique de qualité qui représente la liaison du noeud de liaison montante (2, 2', 2") avec le réseau primaire (5), pour chaque noeud de liaison montante (2, 2', 2"),
envoi d'un message de diffusion par l'intermédiaire de la deuxième interface (4, 4', 4") grâce aux noeuds de liaison montante (2, 2', 2") dont la valeur caractéristique de qualité dépasse une première valeur limite, le message de diffusion contenant la valeur caractéristique de qualité correspondante,
passage des noeuds de liaison montante (2, 2', 2"), dont la valeur caractéristique de qualité tombe en dessous d'une deuxième valeur limite, dans un mode Répéteur (RP) et retrait de ces noeuds de liaison montante (2, 2', 2") des candidats à la Tête de réseau,
comparaison d'une valeur caractéristique de qualité d'un candidat à la Tête de réseau avec une valeur caractéristique de qualité reçue par l'intermédiaire d'un message de diffusion et
détermination du candidat à la Tête de réseau qui présente la valeur caractéristique de qualité la plus élevée, ce candidat à la Tête de réseau devant la Tête de réseau et les autres candidats à la Tête de réseau étant mis en mode Répéteur (RP).

5. Noeud de liaison montante permettant une liaison redondante d'un appareil générant des données à un réseau dorsal, avec :
une première interface (3, 3', 3") qui est conçue pour communiquer avec un réseau primaire (5), la première interface (3, 3', 3") et le réseau primaire (5) permettant un échange de paquets de données avec le réseau dorsal,
une deuxième interface (4, 4', 4") qui est conçue pour communiquer avec un réseau secondaire (6), le réseau secondaire (6) étant constitué d'une PLC (Power-Line Communication) ou d'une BPL (Broadband Power-Line) sur un réseau d'alimentation en énergie,
une unité de routage qui est conçue pour transmettre un paquet de données à envoyer de l'appareil générant des données, lors du dépassement d'une première valeur limite du fait de la qualité de la liaison avec le réseau primaire (5), à la première interface (3, 3', 3") et, lors du passage en dessous d'une deuxième valeur limite du fait de la qualité de la liaison avec le réseau primaire (5), à la deuxième interface (4, 4', 4"),
une unité de transmission, qui peut être mise dans un mode Répéteur (RP) ou un mode Tête de réseau (HE), qui est reliée de façon à communiquer avec la première et la deuxième interfaces (3, 3', 3", 4, 4', 4") et qui est qui conçue pour retransmettre, dans le mode Répéteur (RP), un paquet de données reçu par l'intermédiaire de la deuxième interface (4, 4', 4") au réseau secondaire (6) par l'intermédiaire de la deuxième interface (4, 4', 4") et pour transmettre, dans le mode Tête de réseau (HE), un paquet de données reçu par l'intermédiaire de la deuxième interface (4, 4', 4") au réseau primaire (5) par l'intermédiaire de la première interface (3, 3', 3") et
une unité de configuration qui est conçue pour la négociation d'un mode de fonctionnement de l'unité de transmission avec d'autres noeuds de liaison montante (2, 2', 2") et qui permet à l'unité de transmission d'activer le mode Répéteur (RP) ou d'activer le mode Tête de réseau (HE) en fonction du résultat de la négociation.

6. Noeud de liaison montante selon la revendication 5, **caractérisé par** une unité de génération de données qui est conçue pour la génération de données et pour l'empaquetage des données dans des paquets de données à envoyer, l'unité de génération de données étant reliée de façon à communiquer avec l'unité de routage.

7. Noeud de liaison montante selon la revendication 5 ou 6, **caractérisé par** une troisième interface par l'intermédiaire de laquelle un terminal, qui envoie des paquets de données à envoyer au noeud de liaison montante (2, 2', 2"), peut être relié avec le noeud de liaison montante, la troisième interface étant reliée de façon à communiquer avec l'unité de routage.

8. Noeud de liaison montante selon l'une des revendications 5 à 7, **caractérisé en ce que** l'unité de transmission est conçue pour adopter, en tant qu'état de base, le mode Tête de réseau (HE), l'état de base étant adopté après la mise en marche et/ou après la réinitialisation du noeud de liaison montante (2, 2', 2").

9. Noeud de liaison montante selon l'une des revendications 5 à 8, qui est conçu pour envoyer un message de diffusion par l'intermédiaire de la deuxième interface (4, 4', 4") au réseau secondaire (6) lorsque la qualité de la liaison avec le réseau primaire (5) dépasse une première valeur limite, le message de diffusion permettant le signaler que des noeuds de liaison montante (2, 2', 2") adjacents à l'intérieur du réseau secondaire (6) sont prêts à fonctionner en tant que tête de réseau et un message de diffusion contenant une valeur caractéristique de qualité qui représente la qualité de la liaison avec le réseau primaire (5), l'unité de configuration étant conçue pour extraire, lors de la réception d'un message de diffusion d'un noeud de liaison montante (2, 2', 2") adjacent, la valeur caractéristique de qualité du noeud de liaison montante (2, 2', 2") qui y est contenue et pour la comparer avec une valeur caractéristique de qualité propre.

10. Noeud de liaison montante selon l'une des revendications 5 à 9, **caractérisé en ce que** l'unité de configuration est conçue pour prendre en compte, lors d'une décision d'un passage du mode Tête de réseau (HE) au mode Répéteur (RP), des préférences prédéfinies et/ou des coûts de communication, les coûts de communication contenant des informations concernant la qualité de la liaison dans le réseau secondaire (6).

11. Noeud de liaison montante selon l'une des revendications 5 à 10, **caractérisé par** la capacité à être déterminé en tant que tête de réseau de secours, une détermination de la tête de réseau de secours étant négociée entre les noeuds de liaison montante (2, 2', 2").

12. Noeud de liaison montante selon l'une des revendications 5 à 11, **caractérisé en ce que** l'unité de configuration est conçue pour faire en sorte, dans le cas d'un mode Tête de réseau (HE) activé et lors du passage en dessous de la deuxième valeur limite du fait de la qualité de la liaison avec le réseau primaire (5), que l'unité de transmission passe en mode Répéteur (RP) envoie, par l'intermédiaire du réseau secondaire (6), un message concernant le changement à d'autres noeuds de liaison montante (2, 2', 2") et, le cas échéant à d'autres noeuds du réseau.

13. Noeud de liaison montante selon la revendication 11 et 12, **caractérisé en ce que** le noeud de liaison montante (2, 2', 2") est conçu pour passer en mode Tête de réseau (HE) lorsque le noeud de liaison montante (2, 2', 2") est déterminé en tant que tête de réseau de secours et reçoit un message concernant le passage de la tête de réseau en mode Répéteur (RP).

14. Noeud de liaison montante selon l'une des revendications 5 à 13, **caractérisé par** une unité d'évaluation de liaison montante qui est conçue pour déterminer une valeur caractéristique de qualité qui représente la qualité de la liaison du noeud de liaison montante (2, 2', 2") avec le réseau primaire (5), l'unité d'évaluation de liaison montante étant reliée de façon à communiquer avec l'unité de configuration et déterminant la valeur caractéristique de qualité.

15. Noeud de liaison montante selon l'une des revendications 5 à 14, **caractérisé en ce que** le noeud de liaison montante (2, 2', 2") est conçu pour l'envoi de message de topologie, un message de topologie contenant un identifiant du noeud de liaison montante (2, 2', 2"), les noeuds de liaison montante (2, 2', 2") adjacents visibles, une valeur caractéristique de qualité pour la liaison avec le réseau primaire (5) et/ou une valeur caractéristique de qualité pour la liaison avec le réseau secondaire (6).

16. Procédé de communication redondante avec un réseau dorsal pour l'exploitation d'un système selon l'une des revendications 1 à 4, un réseau primaire (5) étant utilisé pour l'envoi de paquets de données au réseau dorsal et la réception de paquets de données en provenance du réseau dorsal, le système (1) comprenant plusieurs noeuds de liaison montante (2, 2', 2") et les noeuds de liaison montante (2, 2', 2") pouvant être commutés pour un réseau secondaire (6) dans un mode Répéteur (RP) ou un mode Tête de réseau (HE), comprenant les étapes suivantes :
réception ou génération d'un paquet de données à envoyer par l'intermédiaire d'un premier noeud de liaison montante et
envoi du paquet de données à envoyer par l'intermédiaire d'une première interface du premier noeud de liaison montante au réseau primaire (5) lorsqu'une première valeur limite due à la qualité de la liaison avec le réseau primaire (5) est dépassée, ou par l'intermédiaire d'une deuxième interface du premier noeud de liaison montante à un réseau secondaire (6) lors du passage en dessous d'une deuxième valeur limite due à la qualité de la liaison avec le réseau primaire (5), le réseau secondaire (6) étant constitué d'une PLC (Power-Line Communication) ou d'une BPL (Broadband Power-Line), sur un réseau d'alimentation en énergie,
lors de l'envoi du paquet de données à envoyer par l'intermédiaire de la deuxième interface, les étapes suivantes étant en outre exécutées :
transmission du paquet de données à envoyer par l'intermédiaire du réseau secondaire (6) à un deuxième noeud de liaison montante qui fonctionne dans un mode Tête de réseau et qui est relié avec le réseau secondaire (6), le paquet de données à envoyer pouvant être transmis pendant la transmission par l'intermédiaire d'un ou plusieurs noeuds de liaison montante (2, 2', 2") dans un mode Répéteur, une commutation dans le mode Répéteur (RP) ou dans le mode Tête de réseau (HE) étant négociée entre les noeuds de liaison montante (2, 2', 2") et au moins un des noeuds de liaison montante (2, 2', 2") fonctionnant en mode Tête de réseau (HE),
réception du paquet de données à envoyer par l'intermédiaire du deuxième noeud de liaison montante,
transmission du paquet de données à envoyer par l'intermédiaire du deuxième noeud de liaison montante à sa première interface et
envoi du paquet de données à envoyer au réseau primaire (5).
